# EUROPEAN PATENT SPECIFICATION

(11) **EP 3 188 012 B1**
(45) Date of publication and mention of the grant of the patent: **08.09.2021**
(21) Application number: 17152650.2
(22) Date of filing: 20.08.2013
(51) Int. Cl.: H04W 4/50, G06F 9/445, G06F 21/30, H04L 29/08, G06F 21/62

(54) **INFORMATION PROCESSING APPARATUS, COMMUNICATIONS APPARATUS, INFORMATION PROCESSING METHOD, AND INFORMATION PROCESSING PROGRAM**
INFORMATIONSVERARBEITUNGSVORRICHTUNG, KOMMUNIKATIONSVORRICHTUNG, INFORMATIONSVERARBEITUNGSVERFAHREN UND INFORMATIONSVERARBEITUNGSPROGRAMM
APPAREIL DE TRAITEMENT D'INFORMATIONS, APPAREIL DE COMMUNICATIONS, PROCÉDÉ DE TRAITEMENT D'INFORMATIONS ET PROGRAMME DE TRAITEMENT D'INFORMATIONS

(43) Date of publication of application: 05.07.2017
(62) Divisional of application: 13891930.3
(73) Proprietor: FUJITSU LIMITED, Kawasaki-shi Kanagawa 211-8588 (JP)
(72) Inventor: NODA, Masahide, Kawasaki-shi, Kanagawa 211-8588 (JP); YURA, Junichi, Kawasaki-shi, Kanagawa 211-8588 (JP); KIHARA, Hideto, Kawasaki-shi, Kanagawa 211-8588 (JP); OHNO, Takashi, Kawasaki-shi, Kanagawa 211-8588 (JP)
(74) Representative: Haseltine Lake Kempner LLP

(56) References cited:
- EP-A1- 2 587 771
- US-A1- 2012 303 137

## Description

### TECHNICAL FIELD

The present invention relates to an information processing apparatus, a communications apparatus, an information processing method, and an information processing program.

### BACKGROUND ART

Conventionally, with respect to terminals such as mobile terminals, personal digital assistants (PDAs), tablet terminals, and smartphones used in business, management (mobile application management) of whether use of an application via the terminal or a function of the terminal is permitted is performed to prevent leaks of business information, use of the terminal for purposes other than work, and the like. More specifically, a terminal manager preselects according to work needs, functions and applications permitted for use and functions and applications prohibited from use, and reflects the selections on terminals whereby, terminal functions and applications are managed. For example, a function that is problematic in terms of management such as an external storage device is prevented from use, an old, problem-laden application is prevented from use while only the latest application version is permitted for use, and by reflecting management-side information literacy on a user terminal, dependency on the information literacy of the user of the terminal for work can be reduced.

Related techniques include, for example, performing management by preinstalling an application on a terminal and prohibiting the installation of other applications (kitting); confirming the necessity of an application by referencing management information each time an application is installed on a terminal and thereby, monitor the installation of unnecessary applications and detect use of the terminal for unintended purposes.
Patent Document 1 : Japanese Laid-Open Patent Publication No. 2011-3053
Patent Document 2 : Japanese Laid-Open Patent Publication No. 2002-49434

EP2587771 (A1) discloses a mobile communications terminal comprising a memory and a controller. The memory is configured to store a plurality of applications, files and settings. The controller is configured to receive commands originating from a remote user interface through a device communication interface for configuring the mobile communications terminal and to provide access to the plurality of applications, files and settings for the commands received through the device communication interface. The controller is further configured to receive commands through a user interface for operating the mobile communications terminal and provide access to a subset of the plurality of applications, files and settings for the commands received through the user interface and prevent access to the remainder of the plurality of applications, files and settings.

US2012303137 (A1) discloses a method for controlling devices and/or appliances being installed and/or implemented in a user network, includes the steps of providing a management application, and associating one or more UEs with the management application, providing location information of the associated UEs to the management application, and, based on the location information and configured policy rules, performing control actions on the devices and/or appliances. Furthermore, a corresponding system is described.

### DISCLOSURE OF INVENTION

### PROBLEM TO BE SOLVED BY THE INVENTION

Nonetheless, with the techniques above, a problem arises in that an application that permits uses of a terminal cannot be changed flexibly. For example, during a business day, work progresses by subdivided tasks being carried out. However, an application that should be permitted for a given task may also be an application that has to be prohibited from use for another task. Further, in cases where the contents of work vary day-to-day, applications permitted for a given task may change daily.

With the techniques above, a further problem arises in that although the use of an application by a terminal can be prohibited, an action cannot be prompted and forced. For example, in a task of visiting a customer to introduce a product, use of an application for viewing a pamphlet introducing a new product cannot be prompted nor can use of an authorization application for advancing processing in a task of overseeing order processing be forced.

According to one aspect, one object of the present invention is to provide an information processing apparatus, a communications apparatus, an information processing method, and an information processing program that can flexibly change an application permitted for use on a communications apparatus.

Further, according to another aspect, one object of the present invention is to provide an information processing apparatus, a communications apparatus, an information processing method, and an information processing program that can prompt or force application use on a terminal.

### MEANS FOR SOLVING PROBLEM

The present invention is defined by the appended independent claims, to which reference should now be made. Specific embodiments are defined in the dependent claims.

### EFFECT OF THE INVENTION

According to one aspect of the present invention, an effect is achieved in that constraints for business use of a communications apparatus can be reflected flexibly and quickly by a manager.

### BRIEF DESCRIPTION OF DRAWINGS

FIG. 1 is a diagram depicting an example of an information processing system 100;
FIG. 2 is a diagram depicting an example of a structure of the information processing system 100;
FIG. 3 is a block diagram depicting an example of hardware configuration of an information processing apparatus 101;
FIG. 4 is a diagram depicting an example of contents stored by an application set table 400;
FIG. 5 is a diagram depicting an example of contents stored by an application table 500;
FIG. 6 is a diagram depicting an example of contents stored by a transmission destination table 600;
FIG. 7 is a block diagram depicting an example of hardware configuration of a communications apparatus 102;
FIG. 8 is a diagram depicting an example of contents stored by a connection table 800;
FIG. 9 is a block diagram depicting an example of a functional configuration of the information processing apparatus 101;
FIG. 10 is a block diagram depicting an example of a functional configuration of the communications apparatus 102;
FIG. 11 is a diagram for describing contents of a program that realizes a state determination processing function;
FIG. 12 is a diagram depicting a first operation example of the information processing system 100;
FIG. 13 is a sequence diagram of a control application transmitting process of the information processing apparatus 101;
FIG. 14 is a sequence diagram of an application set transmitting process of the information processing apparatus 101;
FIG. 15 is a sequence diagram of an application deleting process of the communications apparatus 102;
FIG. 16 is a sequence diagram of a control application updating process of the information processing apparatus 101;
FIG. 17 is a sequence diagram of an application transmitting process of the information processing apparatus 101 after updating of a control application;
FIG. 18 is a diagram depicting a second operation example of the information processing system 100;
FIG. 19 is a sequence diagram of the control application transmitting process of the information processing apparatus 101; and
FIG. 20 is a sequence diagram of a control application deleting process of the communications apparatus 102.

### BEST MODE(S) FOR CARRYING OUT THE INVENTION

Embodiments of an information processing apparatus, a communications apparatus, an information processing method, and an information processing program according to the present invention will be described in detail with reference to the accompanying drawings.

### (Example of information processing system 100)

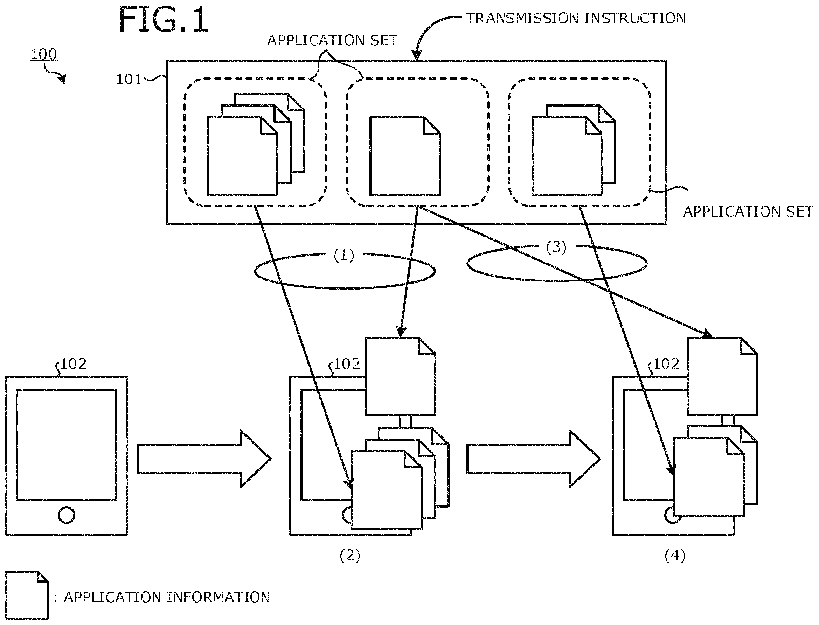

An example of an information processing system 100 that includes an information processing apparatus 101 and a communications apparatus 102 according to the embodiment of the present invention will be described with reference to FIG. 1.

FIG. 1 is a diagram depicting an example of the information processing system 100. The information processing system 100 includes the information processing apparatus 101 and the communications apparatus 102. The information processing system 100 is a system that manages applications permitted to be run on the communications apparatus 102 from the information processing apparatus 101.

The information processing apparatus 101 is a computer capable of communicating with the communications apparatus 102. For example, a server, personal computer (PC), and the like are employed as the information processing apparatus 101.

The information processing apparatus 101 has one or more application sets. Here, an application set is information of one or more applications permitted to run on the communications apparatus 102. Information of an application, for example, may be an application itself, or identification information of an application. Further, information of an application, for example, may be data of an application, or information representing a storage location of the data of an application.

An application includes a program that effects some action by transmission to the communications apparatus 102 and execution by the communications apparatus 102, and data used by the program. A program is an instruction executed on the communications apparatus 102 and data may be information (contents) such as a document, image, audio, etc. influencing the user, or information influencing the communications apparatus 102 such as configuration information necessary for running the program.

Data of an application is data that effects some action by being data used by a program, separated from data used outside the application and read in by a program. Data of an application, for example, may be information (contents) used by the user such as a document, image, audio, and the like, or may be information effecting some action in the communications apparatus 102 such as configuration information necessary for operating a program.

Information representing the storage location of an application or data of the application is an address representing the storage location of the application or the data of the application. Information representing the storage location of an application or data of the application, for example, is a uniform resource locator (URL) of the storage location of the application or the data of the application. A storage location of an application or data of the application may be inside the information processing apparatus 101, or may be inside a computer other than the information processing apparatus 101.

The communications apparatus 102 is a computer capable of communicating with the information processing apparatus 101. For example, a mobile terminal, personal handyphone system (PHS) device, a PDA, a tablet terminal, a smartphone, a notebook PC, and the like are employed as the communications apparatus 102. The communications apparatus 102 receives one or more application sets from the information processing apparatus 101, and reflects each received application set on an application set management means of the communications apparatus 102.

The application set management means of the communications apparatus 102 manages application sets in the communications apparatus 102. Application set management involves the communications apparatus 102 receiving an application set, retaining the application set in a terminal with a previously received application set, deleting from the terminal, application sets that were not received, and executing the application set based on user selection.

In the example depicted in FIG. 1, (1) the information processing apparatus 101 transmits one or more application sets to the communications apparatus 102. (2) The communications apparatus 102 reflects each received application set on the application set management means. Further, when the manager changes the application set(s) to be transmitted to the communications apparatus 102, (3) the information processing apparatus 101 detects the change, and transmits one or more different application sets to the communications apparatus 102. (4) The communications apparatus 102 concurrently reflects the received application set(s) on the application set management means and among the one or more application sets received at (1), deletes application set(s) not received at (4).

Consequently, the information processing apparatus 101 can manage in units of application sets with respect to the communications apparatus 102, applications that can be used on the communications apparatus 102 by the user. Further, such configuration enables the information processing apparatus 101 to transmit to the communications apparatus 102, only information controlling which operations are to be performed for each application set, or such information together with an application set. As a result, the communications apparatus 102 can perform display that reflects available selection options of the user, for each reflected application set; delete a portion of applications included in a reflected application set; output selection dialog related to whether a specified application among applications included in a reflected application set is to be executed; prompt use by conspicuous display; execute an application without selection by the user to force use; etc. Herein, the application executed by the communications apparatus 102 may be singular or plural.

The information processing apparatus 101 may determine for the communications apparatus 102, the timing at which the one or more application sets are reflected, based on information received from the communications apparatus 102. In this case, the information processing apparatus 101 associates identification information of a predetermined state and stores the application set(s). Identification information of a predetermined state is generated by a state determining means that determines from information identifying the state of the communications apparatus 102, whether the communications apparatus 102 has entered the predetermined state, and extracts entering of the predetermined state when the predetermined state is entered. Identification information of a predetermined state, for example, is a sensing result obtained by a sensor of the communications apparatus 102, or a name of a predetermined state, an ID assigned to a predetermined state, etc. The timing at which the identification information of a predetermined state is extracted is the timing at which the one or more application sets are reflected on the communications apparatus 102.

A means of extracting an entering of a predetermined state may be implemented at the information processing apparatus 101, or may be implemented at the communications apparatus 102. Here, an example of implementation at the communications apparatus 102 will be described. In this case, the communications apparatus 102 determines from information identifying the state of the communications apparatus 102, whether the communications apparatus 102 has entered a predetermined state, and when entering a predetermined state, transmits identification information the predetermined state to the information processing apparatus 101.

The state of the communications apparatus 102 is a state identified based on conditions including the sensing result obtained by the sensor of the communications apparatus 102 and the predetermined state. The state of the communications apparatus 102, for example, is a state where the position of the communications apparatus 102 is within a given range from a given position, a state where the communications apparatus 102 has read the ID of a given facility, a state where the communications apparatus 102 is at a given position for a given period, etc. The state of the communications apparatus 102, more specifically, is a state where the position of the communications apparatus 102 is near a display subject, a state where the communications apparatus 102 reads the ID of a facility subject to inspection, a state where the communications apparatus 102 is in a conference room during a conference time period, etc.

Further, the state of the communications apparatus 102 may be a state identified based on whether information obtained by user operation of the communications apparatus 102 satisfies a condition of a predetermined state. In this case, the state of the communications apparatus 102, for example, is a state where a specified application has been invoked on the communications apparatus 102, a state where a specific button of a specified application running on the communications apparatus 102 has been pressed, etc.

The state of the communications apparatus 102 may be a state occurring in a system other than that of the communications apparatus 102 and identified based on whether a result sensed by the communications apparatus 102 satisfies a condition of a predetermined state. In this case, the state of the communications apparatus 102, for example, is a state where in a specified external, entry/exit management system, the user is recorded to have entered a room.

Thus, the information processing apparatus 101 can detect that the communications apparatus 102 has entered a predetermined state, and can transmit to the communications apparatus 102, one or more application sets that are to be reflected on the communications apparatus 102 when the communications apparatus 102 enters the predetermined state. The communications apparatus 102, when entering the predetermined state, can receive the one or more application sets corresponding to the predetermined state and reflect the one or more application sets.

At the time of transmission, the communications apparatus 102 notifies the user that the identification information of a predetermined state has been transmitted, enabling the convenience of the communications apparatus 102 to be enhanced. Further, in response to the transmission of the identification information of the predetermined state, at the time of reception, the communications apparatus 102 notifies the user that an application set has been received, enabling the convenience of the communications apparatus 102 to be enhanced.

Notification to the user, for example, may be the communications apparatus 102 displaying a statement ("came before display subject", etc.) representing the predetermined state, on a screen of the communications apparatus 102 for short period at the time of transmission of the identification information of the predetermined state. Further, notification to the user, for example, may be the communications apparatus 102 outputting a sound from the communications apparatus 102 or causing the communications apparatus 102 to vibrate, at the time of reception of the application set.

Notification to the user, for example, may be the communications apparatus 102 displaying an icon of an application together with a special effect (blinking, rotating, etc.) on a screen of the communications apparatus 102 at the time of reception of the application set. Notification to the user, for example, may be the communications apparatus 102 associating to the transmitted predetermined state and displaying an icon of an application. For example, on a folder representing the predetermined state, an icon of an application may be disposed and shown to the user.

In this manner, the information processing system 100 causes the information processing apparatus 101 to store constraints set by the manager concerning business use of the communications apparatus 102, enabling the stored constraints to be reflected from the information processing apparatus 101 to the communications apparatus 102, at an arbitrary timing configured by the manager. Consequently, the information processing system 100 can flexibly and quickly reflect constraints by the manager, concerning business use of the communications apparatus 102.

The information processing system 100 causes the information processing apparatus 101 to store an application permitted by the manager, for business use of the terminal and reflects the stored application on the communications apparatus 102 from the information processing apparatus 101, at an arbitrary timing configured by the manager, enabling use of an application not already installed.

The information processing system 100 causes the information processing apparatus 101 to store information of applications that the manager wants to prompt the use of on the communications apparatus 102 and reflects on the communications apparatus 102, the stored information from the information processing apparatus 101 at an arbitrary timing configured by the manager. Consequently, through the communications apparatus 102, the information processing system 100 can notify the user of applications that the manager wants to be actively used for determined business uses.

The information processing system 100 can divide among the information processing apparatus 101 and the communications apparatus 102 for processing, a process for providing a service of providing an application to the communications apparatus 102. Consequently, the information processing system 100 can suppress increases in the processing load of the information processing apparatus 101 when providing a service.

Since the information processing apparatus 101 needs not collect information sensed by the sensor of the communications apparatus 102 or determine whether the communications apparatus 102 has entered a predetermined state, increases in the processing load of the information processing apparatus 101 when providing a service can be suppressed. Further, since the information processing apparatus 101 can suppress processing load increases, increases in the time consumed for processing can be suppressed. The information processing apparatus 101 can further suppress increases in the time consumed from the reception of the identification information of a predetermined state from the communications apparatus 102 until transmission of an application to the communications apparatus 102. Therefore, the information processing apparatus 101 can suppress increases in the time that the user of the communications apparatus 102 waits until the application is executed. Further, the information processing apparatus 101 can suppress increases in cost accompanying increases in processing load.

Since the information processing apparatus 101 suffices to collect the identification information of states of the communications apparatus 102 and needs not collect information sensed by the sensor of the communications apparatus 102, increases in the volume of communication with the communications apparatus 102 can be suppressed. The information processing apparatus 101 can further suppress increases in the volume of communication even when the volume and types of information sensed by the sensor of the communications apparatus 102 become massive. The information processing apparatus 101 can suppress increases in power consumption for communication with the communications apparatus 102.

Since the communications apparatus 102 suffices to transmit to the information processing apparatus 101, identification information of the state of the communications apparatus 102 and needs not transmit to the information processing apparatus 101, information sensed by the sensor of the communications apparatus 102, increases in the volume of communication with the information processing apparatus 101 can be suppressed. Further, the communications apparatus 102 can suppress increases in the communication volume even when the volume and types of information sensed by a sensor of the communications apparatus 102 become massive. The communications apparatus 102 can suppress increases in power consumption for communication with the information processing apparatus 101.

Since the information processing apparatus 101 needs not collect information sensed by the sensor of the communications apparatus 102, increases in the communication load on a network connecting the information processing apparatus 101 and the communications apparatus 102 can be suppressed. Further, since the information processing apparatus 101 suffices to collect identification information of the state of the communications apparatus 102 and needs not collect from the communications apparatus 102, information sensed by the sensor of the communications apparatus 102 and protection of the privacy of the user of the communications apparatus 102 can be facilitated.

(Example of structure of information processing system 100)

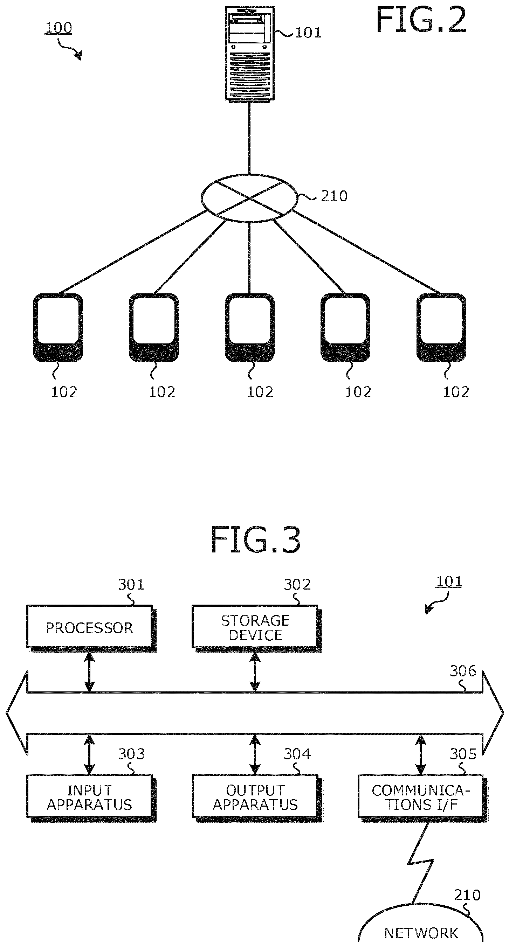

An example of a structure of the information processing system 100 depicted in FIG. 1 will be described with reference to FIG. 2.

FIG. 2 is a diagram depicting an example of a structure of the information processing system 100. In FIG. 2, a network 210 is the network 210 communicable with the information processing apparatus 101 and plural communications apparatuses 102. The network 210, for example, is a local area network (LAN). The network 210, more specifically, includes a wireless LAN access point (LAN-AP), and is connected to the information processing apparatus 101 and plural communications apparatuses 102. Further, the network 210, for example, may be a wide area network (WAN), the Internet, a mobile telephone network, etc. Configuration may be such that the communications apparatus 102 is in a state of being unable to connect to the network 210.

### (Example of hardware configuration of information processing apparatus 101)

An example of hardware configuration of the information processing apparatus 101 depicted in FIG. 1 will be described with reference to FIG. 3.

FIG. 3 is a block diagram depicting an example of hardware configuration of the information processing apparatus 101. In FIG. 3, the information processing apparatus 101 is configured such that a processor 301, a storage device 302, an input apparatus 303, an output apparatus 304, and a communications interface (I/F) 305 are connected by a bus 306.

The processor 301 governs overall control of the information processing apparatus 101. The processor 301 executes various programs stored in the storage device 302 such as an operating system (OS) and the information processing program of the present embodiment and thereby, reads out data in the storage device 302, writes to the storage device 302, data that are execution results, etc.

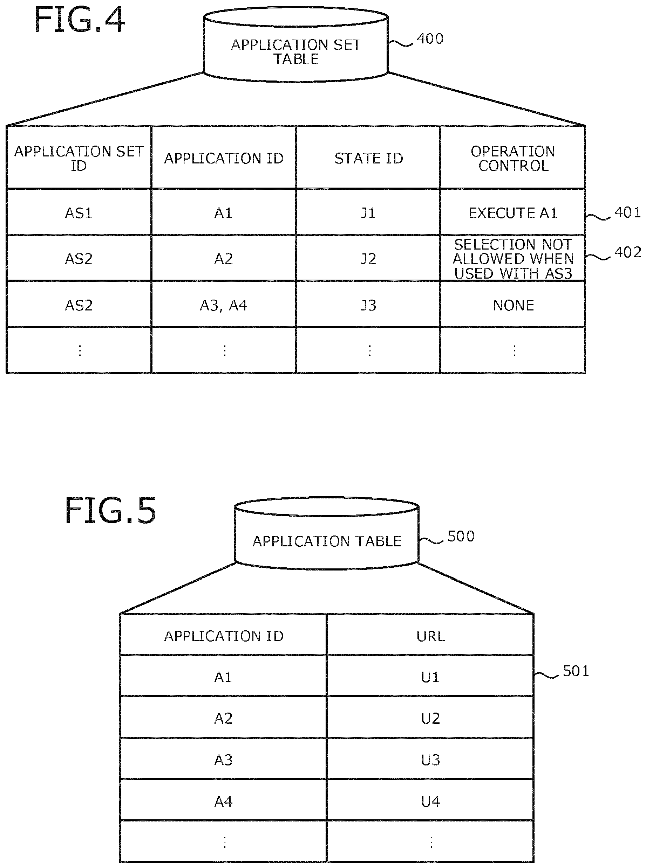

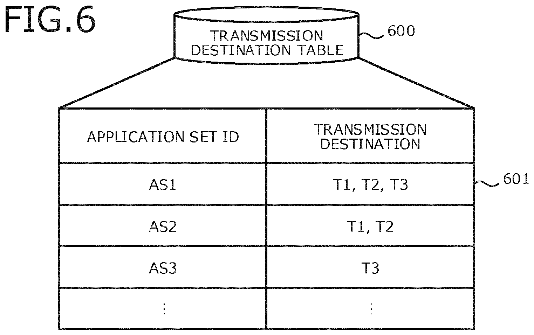

The storage device 302 is configured by read-only memory (ROM), random access memory (RAM), flash memory, a magnetic disk drive, etc., is used as a work area of the processor 301, and stores various programs and various types of data including data obtained by execution of the various programs. The storage device 302 further stores an application set table 400 described hereinafter with reference to FIG. 4, an application table 500 described hereinafter with reference to FIG. 5, and a transmission destination table 600 described hereinafter with reference to FIG. 6. The storage device 302 stores applications. The applications may be stored by another computer.

The input apparatus 303 is an interface that performs the input of various types of data by user operation of a keyboard, a mouse, a touch panel, etc. The input apparatus 303 may be a scanner. Here, a keyboard is equipped with keys for inputting text, numerals, various types of instructions, etc. and performs the input of data. A mouse moves a cursor, changes a selection range thereof, moves a window, changes the size thereof, etc. A track ball or a joy stick may be adopted provided each respectively has a function similar to a pointing device.

The output apparatus 304 is an interface that outputs data consequent to an instruction of the processor 301. The output apparatus 304 may be a display, a printer, etc. Here, a display displays data such as text, images, functional information, etc., in addition to a cursor, icons, and/or tool boxes. A liquid crystal display, a plasma display, etc., may be employed as the display. Further, a printer prints image data and document data. For example, a laser printer, ink jet printer, etc. may be employed as the printer.

The communications I/F 305 is an interface that receives data from an external source through the network 210, and transmits data to an external destination. A modem, LAN adapter, etc. may be employed as the communications I/F 305, for example.

### (Stored contents of application set table 400)

An example of the contents stored by the application set table 400 will be described with reference to FIG. 4. The application set table 400, for example, is realized by a storage area such as the storage device 302 depicted in FIG. 3.

FIG. 4 is a diagram depicting an example of the contents stored by the application set table 400. As depicted in FIG. 4, the application set table 400 has an application ID field associated with an application set ID field, and by setting information into the respective fields for each application set ID, the information is stored as records. The application set table 400 may further have a state ID field and/or an operation control field.

The application set ID field stores an identifier of an application set. The application ID field stores the identification information of an application to be transmitted to the communications apparatus 102 when the communications apparatus 102 enters the state indicated in the state ID field. The application ID field may store the identification information of plural applications. The state ID field stores the identification information of the state. The operation control field indicates which operation is to be performed when the application set is reflected on the communications apparatus 102.

For example, record 401 indicates an application set that includes application set identifier "AS1", application identification information "A1", state identification information "J1", and operation information "execute A1" of the application set. Record 402 indicates an application set that includes an application set identifier "AS2", application identification information "A2", state identification information "J2", and operation control information "selection not allowed when used with AS3" of the application set.

### (Stored contents of application table 500)

An example of the contents stored by the application table 500 will be described with reference to FIG. 5. The application table 500, for example, is implemented by a storage area such as the storage device 302 depicted in FIG. 3.

FIG. 5 is a diagram depicting an example of the contents stored by the application table 500. As depicted in FIG. 5, the application table 500 has a URL field associated with an application ID field and by setting information into the respective fields for each state, the information is stored as records.

The application ID field stores the identification information of an application. The URL field stores a URL representing the storage location of the application indicated in the application ID field. The URL representing the storage location of the application, for example, may specify in the storage device 302, an area where the application is stored. Further, when the application is stored by a computer other than the information processing apparatus 101, the URL representing the storage location of the application may specify in the other computer, an area where the application is stored. For example, record 501 indicates application information including application identification information "A1" and URL "U1".

### (Stored contents of transmission destination table 600)

An example of the contents stored by the transmission destination table 600 will be described with reference to FIG. 6. The transmission destination table 600, for example, is realized by a storage area such as the storage device 302 depicted in FIG. 3.

FIG. 6 is a diagram depicting an example of the contents stored by the transmission destination table 600. As depicted in FIG. 6, the transmission destination table 600 has a transmission destination field associated with an application set ID field and by setting information into the respective fields for each predetermined state, the information is stored as records.

The application set ID field stores the identification information of an application set. The transmission destination field stores the identification information of the communications apparatus 102 on which the application set is reflected. For example, record 601 indicates transmission destination information that includes application set identification information "AS1", and identification information "T1, T2, T3" of the communications apparatus 102.

### (Example of hardware configuration of communications apparatus 102)

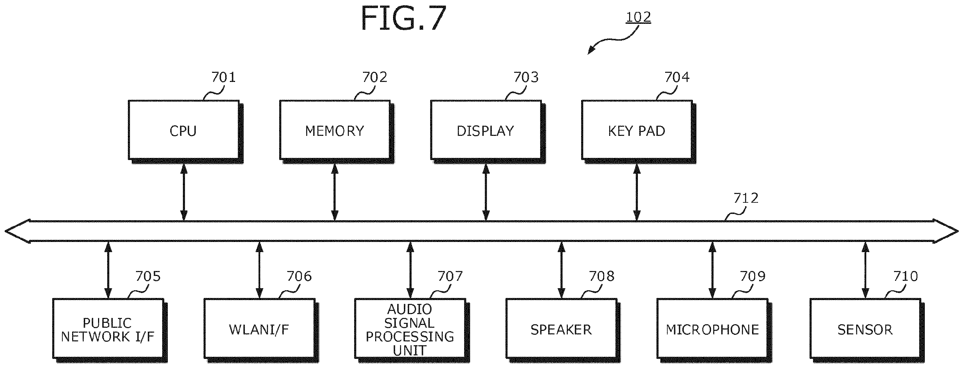

An example of hardware configuration of the communications apparatus 102 depicted in FIG. 1 will be described with reference to FIG. 7.

FIG. 7 is a block diagram depicting an example of hardware configuration of the communications apparatus 102. In FIG. 7, the communications apparatus 102 has a central processing unit (CPU) 701, memory 702, a display 703, a key pad 704, a public network I/F 705, a wireless LAN (WLAN) I/F 706, an audio signal processing unit 707, a speaker 708, a microphone 709, and a sensor 710. Further, the constituent units are connected by a bus 712, respectively.

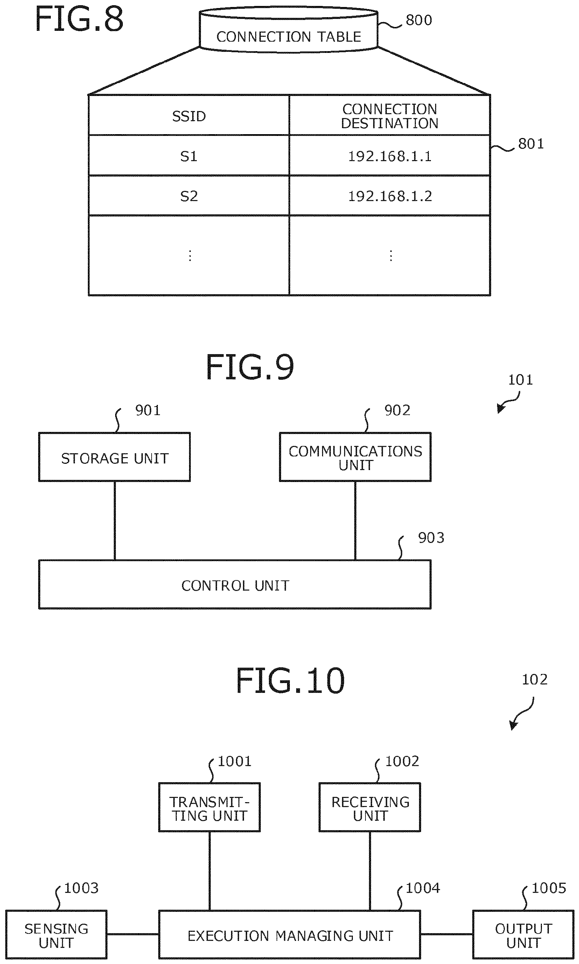

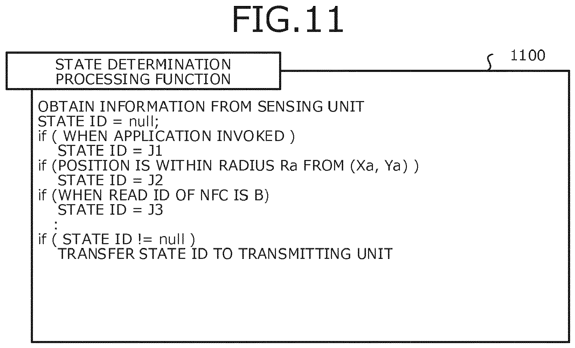

Here, the CPU 701 governs overall control of the communications apparatus 102. The memory 702, for example, includes ROM, RAM, flash ROM, etc. More specifically, for example, the flash ROM stores an OS program; the ROM stores application programs; and the RAM is used as a work area of the CPU 701. The ROM further stores a connection table described hereinafter with reference to FIG. 8. Programs stored in the memory 702 are loaded onto the CPU 701 whereby, coded processes are executed by the CPU 701. An application realizing a state determination processing function described hereinafter with reference to FIG. 11 is further stored in the flash ROM, RAM, etc. of the memory 702 and is loaded onto the CPU 701.

The display 703 displays data such as text, images, functional information, etc., in addition to a cursor, icons, and/or tool boxes. A liquid crystal display, an organic electroluminescence (EL) display, etc., for example, may be employed as the display 703.

The key pad 704 is equipped with keys for inputting text, numerals, various types of instructions, etc. and performs the input of data. The key pad 704, for example, may be a touch panel input pad, numeric key pad, a power button, etc.

The public network I/F 705 is connected to the network 210 through a base station of a mobile communications network and is connected to other computers through the network 210. The public network I/F 705 administers an internal interface with the network 210 and controls the input and output of data from the other computers.

The WLAN I/F 706 is connected to the network 210 through a wireless LAN access point and is connected to other computers through the network 210. The WLAN I/F 706 administers an internal interface with the network 210 and controls the input and output of data from the other computers.

The audio signal processing unit 707 is connected to the speaker 708 and the microphone 709. For example, sound received by the microphone 709 is A/D converted by the audio signal processing unit 707. Further, sound is output from the speaker 708.

The sensor 710 senses information identifying a state of the communications apparatus 102. The sensor 710, for example, is an ID reader, acceleration sensor, temperature sensor, humidity sensor, pedometer, angle sensor, geomagnetic sensor, etc.

The communications apparatus 102, for example, may have various timers, a global positioning system (GPS) unit, etc. Further, the communications apparatus 102 may have a memory controller that controls the reading and writing of data with respect to the memory 702, a power management unit (PMU) that supplies source voltage to constituent units, a battery, etc.

### (Stored contents of connection table 800)

An example of the contents stored by a connection table 800 will be described with reference to FIG. 8. The connection table 800, for example, is realized by a storage area such as the memory 702 depicted in FIG. 7.

FIG. 8 is a diagram depicting an example of the contents stored by the connection table 800. As depicted in FIG. 8, the connection table 800 has a connection destination field associated with a SSID field and by setting information into the respective fields for each connection destination, the information is stored as records.

The SSID field stores a service set identifier (SSID) of an access point of the information processing apparatus 101. The connection destination field stores an IP address of the information processing apparatus 101. For example, record 801 indicates connection destination information that includes SSID "S1", and Internet Protocol (IP) address "192.168.1.1".

### (Example of functional configuration of information processing apparatus 101)

An example of a functional configuration of the information processing apparatus 101 will be described with reference to FIG. 9. FIG. 9 is a block diagram depicting an example of a functional configuration of the information processing apparatus 101. The information processing apparatus 101 includes a storage unit 901, a communications unit 902, and a control unit 903.

The storage unit 901 stores application sets to be transmitted to the communications apparatus 102 at a timing determined by the manager. The timing determined by the manager may be transmission corresponding to the communications apparatus 102 entering the predetermined state and in this case, the storage unit 901 stores associated with the application sets, identification information for each state among plural states including the predetermined state.

Here, a state is a state identified based on conditions including a sensing result obtained by the sensor of the communications apparatus 102 and the predetermined state, a state identified based on whether user operation of the communications apparatus 102 satisfies a condition of a predetermined state, etc. The state may be a state occurring in a system other than the communications apparatus 102 and identified based on whether a result sensed by the communications apparatus 102 satisfies a condition of a predetermined state.

The state of the communications apparatus 102, for example, is a state where the communications apparatus 102 is within a given range from a given position, a state where the communications apparatus 102 has read the ID of a given facility, a state where the communications apparatus 102 is present at a given location for a given period of time, etc. The state of the communications apparatus 102 may be a state where a specified application has been invoked by the communications apparatus 102, or a state where a specific button has been pressed in a specified application of the communications apparatus 102. The state of the communications apparatus 102, more specifically, is a state where the position of the communications apparatus 102 is near a display subject, a state where the communications apparatus 102 has read the ID of a facility subject to inspection, a state where the communications apparatus 102 is present in a conference room for a conference period, etc.

The storage unit 901, for example, stores the application set table 400 depicted in FIG. 4 and the application table 500 depicted in FIG. 5. Thus, the control unit 903 can specify based on the stored contents of the storage unit 901, an application set that corresponds to the ID of an application set that is to be reflected on the communications apparatus 102. Further, an application set that is to be reflected corresponding to the state of the communications apparatus 102 can be specified. Functions of the storage unit 901, for example, are realized by the storage device 302 depicted in FIG. 3.

An application included in an application set may be an application having a function of a state determining process. The state determining process is a function of determining from information indicating the state of the communications apparatus 102, whether the communications apparatus 102 has entered a predetermined state, and transmitting to the information processing apparatus 101, identification information of the predetermined state, when the predetermined state is entered. An application realizing such functions is assumed to be a control application. The control application, for example, realizes a function of controlling the communications apparatus 102 and determining based on sensing results of the sensor 710, whether the communications apparatus 102 has entered a predetermined state. The control application realizes a function of transmitting to the information processing apparatus 101, the identification information of the predetermined state, when the predetermined state is entered.

The control application may further realize a function of determining whether the communications apparatus 102 is within a communication range of the information processing apparatus 101. The control application may realize a function of deleting an application set when after the application set has been received by the communications apparatus 102, the communications apparatus 102 is no longer within communication range of the information processing apparatus 101. The control application, for example, realizes a function of controlling the communications apparatus 102 and deleting an application set received from the information processing apparatus 101, in response to the communications unit 902 detecting that connection to the information processing apparatus 101 is no longer possible.

The control application may further realize a function of deleting the control application itself when the communications apparatus 102 is no longer in the predetermined state after having received the control application. The control application, for example, realizes a function of controlling the communications apparatus 102 and determining based on sensing results of the sensor 710, whether the communications apparatus 102 is no longer in the predetermined state. The control application may realize a function of deleting the control application itself received from the information processing apparatus 101, when the communications apparatus 102 is no longer in the predetermined state.

The control application, more specifically, realizes a function of controlling the communications apparatus 102 and determining based on sensing results of the sensor 710, whether the communications apparatus 102 has entered a predetermined state. The control application realizes a function of transmitting to the information processing apparatus 101, identification information of the predetermined state, when the predetermined state is entered.

The communications unit 902 communicates with the communications apparatus 102. Configuration may be such that the communications unit 902 regards only the communications apparatuses 102 within the limited communication range of the information processing apparatus 101 to be communication counterparts. The communication counterparts, for example, may be limited to the communications apparatuses 102 within the communication range of a wireless LAN access point to which the information processing apparatus 101 is connected. The communications unit 902, for example, receives from a communications apparatus 102, identification information of the state of the communications apparatus 102. Received data, for example, is stored to a storage area of the storage device 302. Further, the communications unit 902 transmits application sets to the communications apparatus 102. If there is operation control information corresponding to an application set, the communications unit 902 transmits the operation control information together with the application set to the communications apparatus 102.

The application set transmitted to the communications unit 902 may include an application that realizes a function of determining from information identifying the state of the communications apparatus 102, whether the communications apparatus 102 has entered another state different from the states among the plural states. The application set may include an application that realizes a function of transmitting to the information processing apparatus 101, identification information of another state when the other state is entered.

The application, more specifically, is an inspection application for inspecting a facility and for each inspection, has an input column for inspection results. The application may further realize a function of transmitting to the information processing apparatus 101, the identification information of a state where the communications apparatus has "inspected a faulty facility". Thus, the communications unit 902 can exchange data with the information processing apparatus 101. Functions of the communications unit 902, for example, are realized by the communications I/F 305 depicted in FIG. 3.

The control unit 903, when an instruction from the manager or identification information of a predetermined state is received, transmits to the communications apparatus 102, an application set that is stored in storage unit 901 and corresponds to the identification information of the predetermined state.

The control unit 903, for example, when an instruction from the manager is received instructing a specified application identifier to be transmitted to a specified communications apparatus 102, identifies a record that is stored in the application set table 400 and related to the specified application identifier. Alternatively, the control unit 903, when identification information of a state "within given range from display subject" is received from the communications apparatus 102, identifies a record that is stored in the application set table 400 and related to the state "within a given range from display subject". Next, the control unit 903 extracts the application identification information set in the application ID field included in the record.

Subsequently, the control unit 903 identifies a record that is stored in the application table 500 and related to the application identifier. The control unit 903 extracts the URL that is set in the URL field of the record and represents the storage location of the application. The control unit 903 controls the communications unit 902 and transmits the URL that represents the storage location of the application to the communications apparatus 102. Here, the control unit 903 may add in the transmission destination field that is included in the record of the transmission destination table 600 and related to the application set ID field, the identification information of the communications apparatus 102 to which the application set was transmitted.

The control unit 903, for example, when identification information of a state "connection request" is received from the communications apparatus 102, uses the communications unit 902 and transmits to the communications apparatus 102, an application set that includes the control application. The control unit 903, for example, when the identifier of a state "connection request" is received from the communications apparatus 102, identifies a record that is stored in the application set table 400 and related to the state "connection request". Next, the control unit 903 extracts the application identification information set in the application ID field included in the record.

Subsequently, the control unit 903 identifies a record that is stored in the application table 500 and related to the application identification information. The control unit 903 extracts the URL that is set in the URL field of the record and represents the storage location of the control application. The control unit 903 uses the communications unit 902 and transmits to the communications apparatus 102, the URL representing the storage location of the control application. Here, the control unit 903 may add in the transmission destination field that is included in the record of the transmission destination table 600 and related to the application set, the identification information of the communications apparatus 102 to which the application set was transmitted.

The control unit 903, when an application set is updated after being transmitted to the communications apparatus 102, transmits the updated application set to the communications apparatus 102. Here, the updated application set, for example, is the updated application or a URL representing the storage location of the updated application. Further, the updated application set, for example, may be notification information requesting acquisition from the same storage location as the storage location of the application before updating, when the storage location of the application before and after updating is not changed. The updated application set, for example, may be information of update differences enabling an updated application to be obtained by combining the information with an application that has not been updated.

The control unit 903 detects that an application set has been updated. Next, the control unit 903 extracts the identification information set in the application set ID field of the record in the application set table 400 related to the application set. The control unit 903 extracts the identification information set in the transmission destination field of the record in the transmission destination table 600 related to the application set. The control unit 903 transmits the updated application set to the communications apparatus 102 identified by the identification information. Functions of the control unit 903, for example, are realized by executing on the processor 301, a program stored in the storage device 302 depicted in FIG. 3 or by the communications I/F 305.

The control unit 903, when an instruction by the manager is received or the identification information of a predetermined state is received, transmits to the communications apparatus 102, information that controls application operation. The information that controls application operation may be information of the operation control field associated with the identification information of the predetermined state registered in the application set table 400, or information arbitrarily specified by the manager. The control unit 903 may transmit the operation control information together at the time of transmission of the application set, or may transmit the operation control information alone. In this case, the control unit 903 may transmit the operation control information for one or more applications to the communications apparatus 102.

The operation control information, for example, may be information describing operation where among one or more application sets reflected on a communications apparatus 102, a portion of the application sets, or one or more applications included in an application set cannot be selected, or are deleted. The operation control information may be information describing an operation where among one or more application sets reflected on a communications apparatus 102, one or more applications included in a portion of the application sets are executed, or execution thereof is prompted.

### (Example of function configuration of communications apparatus 102)

An example of a functional configuration of the communications apparatus 102 will be described with reference to FIG. 10. FIG. 10 is a block diagram depicting an example of a functional configuration of the communications apparatus 102. The communications apparatus 102 includes a transmitting unit 1001, a receiving unit 1002, a sensing unit 1003, an execution managing unit 1004, and an output unit 1005.

The transmitting unit 1001 transmits identification information of the state to the information processing apparatus 101, which stores application sets associated with the identification information of predetermined states. Functions of the transmitting unit 1001, for example, are realized by the public network I/F 705 and the WLAN I/F 706.

The receiving unit 1002 receives an application set from the information processing apparatus 101. The receiving unit 1002, for example, receives from the information processing apparatus 101, a URL representing the storage location of an application. The receiving unit 1002 may further receive from the information processing apparatus 101, operation control information of the application. Thus, the execution managing unit 1004 can obtain the application. Functions of the receiving unit 1002, for example, are realized by the public network I/F 705 and the WLAN I/F 706.

The sensing unit 1003 senses information specifying a state of the communications apparatus 102 thereof. The sensing unit 1003, for example, senses acceleration of the communications apparatus 102 thereof. Thus, the execution managing unit 1004 can determine whether the communications apparatus 102 thereof has entered a predetermined state. Functions of the sensing unit 1003 are realized by the sensor 710, the key pad 704, etc., or the public network I/F 705 and the WLAN I/F 706.

The execution managing unit 1004 retains the application set received by the receiving unit together with existing application sets in the terminal; deletes from the terminal, the application sets not received; and performs execution based on user selection. The execution managing unit 1004 may control operation of an application, based on operation control information of the application received by the receiving unit 1002.

For example, according to whether another application set is received, selection of an application in the application set is disabled, or operation control information indicating deletion is described. In such cases, the execution managing unit 1004 determines whether among application sets reflected on the communications apparatus 102, an application set specified as not being selectable is present and when such a specified application set is present, the execution managing unit 1004 disables selection of the specified application set by the user or deletes the specified application set. Disabling selection is disabling among plural applications, selection for execution. Deletion is disabling use by deleting the application, including management information from the communications apparatus 102. By such operation control information, in a specified state, an application or application set that cannot be used can be defined.

A case can be given as an example where operation control information is described that executes or prompts execution of an application included in an application set. In this case, the execution managing unit 1004 executes without user selection, an application specified for execution among applications included in a received application set. Further, a specified application for which execution is to be prompted is presented as a selection option "invoke application?" by being displayed in a large size to facilitate selection by the user. By such operation control information, an application or application set desired to be actively used or absolutely executed by the user can be defined at reflection.

The execution managing unit 1004 may include the state determination processing function depicted in FIG. 11. The state determining process has a function of determining from information identifying the state of the communications apparatus 102, whether the communications apparatus 102 has entered a predetermined state and when the communications apparatus 102 has entered the predetermined state, transmitting the identification information of the predetermined state to the information processing apparatus 101. The state determination processing function, for example, realizes a function of controlling the communications apparatus 102 and determining based on a sensing result of the sensor 710, whether the communications apparatus 102 has entered the predetermined state. The state determination processing function realizes a function of transmitting the identification information of the predetermined state to the information processing apparatus 101, when the predetermined state is entered. Further, the state determination processing function may realize a function of deleting one or more application sets reflected corresponding to the predetermined state, when the predetermined state has ended.

The state determination processing function may realize a function of determining whether the communications apparatus 102 is present within a communication range of the information processing apparatus 101. Further, the state determination processing function may realize a function of deleting an application set, when after the communications apparatus 102 has received the application set, the communications apparatus 102 is no longer within the communication range of the information processing apparatus 101.

The state determination processing function is configured by a program that reads out specified information and determines whether a predetermined state has been entered, and operation control data defining a range of necessary information for the determination. The execution managing unit 1004 may have a fixed the state determining process program and operation control data, or may receive and apply operation control data as a portion of an application set. The state determination processing function may be received and executed as a control application combining the state determining process program and operation control data.

The execution managing unit 1004 can execute plural applications. The execution managing unit 1004 executes applications, based on the application set received by the receiving unit 1002. The execution managing unit 1004, for example, obtains the control application from the storage location of the control application based on the URL representing the storage location of the control application included in the application set received by the receiving unit 1002. The execution managing unit 1004 executes the control application. Thus, when the communications apparatus 102 of the control unit 903 enters the predetermined state, the control unit 903 can transmit the identification information of the predetermined state to the information processing apparatus 101.

The execution managing unit 1004, for example, obtains an application from the storage location of the application, based on the URL representing the storage location of the application included in the application set received by the receiving unit 1002. The execution managing unit 1004 executes the application. Functions of the execution managing unit 1004, for example, are realized by executing on the CPU 701, a program stored in the memory 702 depicted in FIG. 7, by the public network I/F 705 and the WLAN I/F 706, or by the audio signal processing unit 707 and the sensor 710.

The output unit 1005 outputs information indicating that given identification information has been transmitted, when the identification information of the predetermined state is transmitted by the transmitting unit 1001. The output unit 1005 may output information indicating that an application has been received, when an application is received by the receiving unit 1002.

The output unit 1005, for example, operates as a notifying unit by displaying on the display 703, information such as information indicating that given identification information has been transmitted, information indicating that an application has been received by the receiving unit 1002, etc. Further, the output unit 1005, for example, may operate as a talking unit that uses the audio signal processing unit 707 and outputs from the speaker 708, a machine voice indicating that given identification information has been transmitted, a machine voice indicating that an application has been received by the receiving unit 1002, etc.

Thus, the output unit 1005 can notify the user of the communications apparatus 102, of transmission of the identification information of the predetermined state and make the user of the communications apparatus 102 aware of the execution of an application by the communications apparatus 102. Further, the output unit 1005 can notify the user of the communications apparatus 102, of the receipt of an application and make the user of the communications apparatus 102 aware of the execution of the application by the communications apparatus 102. Functions of the output unit 1005, for example, are realized by executing on the CPU 701, a program stored in the memory 702 depicted in FIG. 7, by the display 703, or by the audio signal processing unit 707.

The output unit 1005 may output a screen that receives input of whether execution of an application is permitted together with information indicating that the application has been received by the receiving unit 1002 or information indicating that given identification information has been transmitted. In this case, only when input indicating that execution of the application by the user of the communications apparatus 102 is permitted is input, the execution managing unit 1004 executes the application. Thus, configuration can be such that when the manager does not want an application to be executed, the communications apparatus 102 does not allow the user of the communications apparatus 102 to execute the application.

### (Example of contents of program realizing state determination processing function)

An example of the contents of a program realizing the state determination processing function will be described with reference to FIG. 11.

FIG. 11 is a diagram for describing the contents of a program that realizes the state determination processing function. As depicted in FIG. 11, a program realizing the state determination processing function includes an instruction to obtain information that is sensed by the sensing unit 1003 and that identifies the state of the apparatus thereof. The program realizing the state determination processing function further includes an instruction to substitute null for a state ID.

The program realizing the state determination processing function includes an instruction to use an if statement to determine whether a predetermined state has been entered, and to set as the state ID corresponding to a predetermined state entered, identification information of the predetermined state. The program realizing the state determination processing function, for example, includes an instruction to use an if statement to determine whether a state "application invoked" has been entered, and to set identification information "J1" as the state ID corresponding to the predetermined state.

The program realizing the state determination processing function includes an instruction to use an if statement and when the state ID is set to a value other than null, transmit the state ID to the information processing apparatus 101. The communications apparatus 102, for example, executes the program realizing the state determination processing function above, enabling the state determination processing function to be realized.

The program realizing the state determination processing function may be received from the information processing apparatus 101 as a control application, or may be preinstalled in the communications apparatus 102. The program realizing the state determination processing function, when preinstalled in the communications apparatus 102, may be configured to enable the contents of the program to be changed according to information received by the information processing apparatus 101.

### (First operation example of information processing system 100)

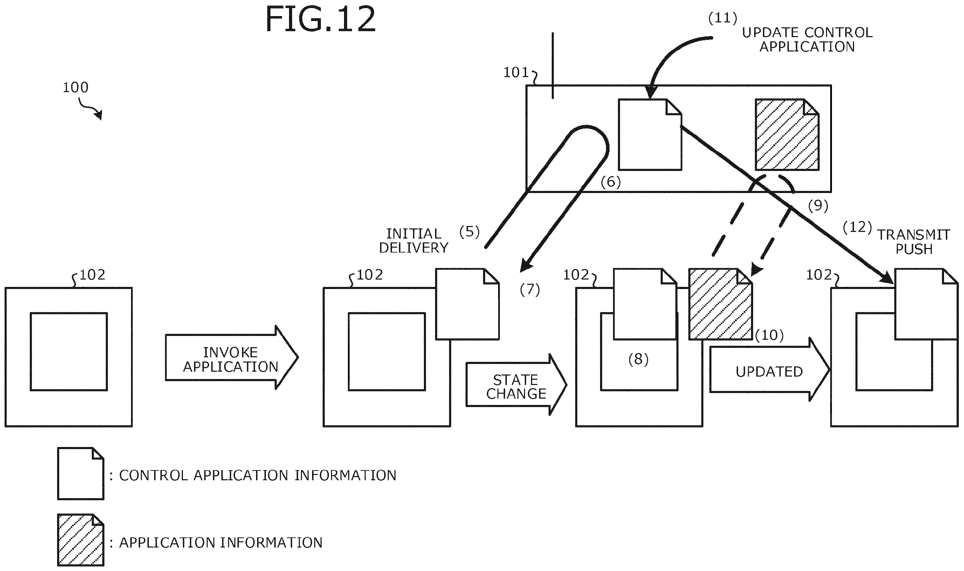

A first operation example of the information processing system 100 will be described with reference to FIG. 12.

FIG. 12 is a diagram depicting the first operation example of the information processing system 100. In the example depicted in FIG. 12, (5) the communications apparatus 102 receives operational input from the user of the communications apparatus 102 and invokes an application that transmits a connection request to the information processing apparatus 101. The communications apparatus 102, consequent to invoking the application, transmits to the information processing apparatus 101, the identification information "J1" of a state "application invoked".

(6) The information processing apparatus 101, when receiving the identification information "J1" of the state from the communications apparatus 102, identifies a record that is stored in the application set table 400 and has the identification information "J1" of the state "application invoked" set in the state ID field. Next, the information processing apparatus 101 extracts an application set identifier "AS1" set as application set ID in the record. The information processing apparatus 101 extracts a control application identifier "A1" set in the application ID field of the record. Further, the information processing apparatus 101 identifies a record that is stored in the application table 500 and has the application identifier "A1" set in application ID field. Next, the information processing apparatus 101 extracts the URL "U1" that is set in the URL field of the record and represents the storage location of the control application. The information processing apparatus 101, via the WLAN I/F 706, transmits the URL "U1" representing the storage location of the control application, to the communications apparatus 102.

Here, the information processing apparatus 101 identifies a record that is stored in the transmission destination table 600 and has the application set identification information "AS1" set in the application set ID field. The information processing apparatus 101 adds to the transmission destination field included in the record, the identification information "T1" of the communications apparatus 102 to which the URL representing the storage location of the control application was transmitted.
(7) The communications apparatus 102, when receiving the URL, obtains the control application from the storage location represented by the URL, and executes the control application. (8) The communications apparatus 102, by executing the control application, determines based on information sensed by the sensor 710 of the communications apparatus 102, whether the communications apparatus 102 has entered a state "within given range of display subject". The communications apparatus 102, when having entered the state "within given range of display subject", transmits the identification information "J2" of the state "within given range of display subject" to the information processing apparatus 101.
(9) The information processing apparatus 101, when receiving the identification information "J2" of the state "within given range of display subject" from the communications apparatus 102, identifies a record that is stored in the application set table 400 and has the identification information "J2" set in the state ID field. Next, the information processing apparatus 101 extracts the application set identifier "AS2" set in the application set ID field included in the record. The information processing apparatus 101 further extracts the application identifier "A2" set in the application ID field included in the record. The information processing apparatus 101 further identifies a record that is stored in the application table 500 and has the application identifier "A2" set in the application ID field.

Subsequently, the information processing apparatus 101 extracts the URL "U2" that is set in the URL field in the record and represents the storage location of the application to be executed by the communications apparatus 102 when the communications apparatus 102 enters the state "within given range of display subject". Here, the application to be executed by the communications apparatus 102 when the communications apparatus 102 enters the state "within given range of display subject" may be plural, and the URL representing the storage location of the applications may be plural. The information processing apparatus 101, by the WLAN I/F 706, transmits the URL "U2" representing the storage location of the application to the communications apparatus 102.

Here, the information processing apparatus 101 identifies a record that is stored in the transmission destination table 600 and has the application set identification information "AS2" stored in the application set ID field. The information processing apparatus 101 adds to the transmission destination field included in the record, the identification information "T1" of the communications apparatus 102 to which the URL representing the storage location of the application was transmitted.
(10) The communications apparatus 102 receives from the information processing apparatus 101, the URL representing the storage location of the application that corresponds to the state "within given range of display subject". Next, the communications apparatus 102 obtains the application from the storage location represented by the URL and executes the application.
(11) The information processing apparatus 101 detects updating of the control application identified by the identification information "A1". (12) The information processing apparatus 101, when detecting updating of the control application identified by the identification information "A1", identifies a record that is stored in the application set table 400 and has the identification information "A1" set as the application set ID. Next, the information processing apparatus 101 extracts the identification information "AS1" set in the application set ID field of the record. The information processing apparatus 101 further identifies a record that is stored in the transmission destination table 600 and has the identification information "AS1" set in the application set ID field, and extracts the identification information "T1" set in the transmission destination field included in the record. The information processing apparatus 101 transmits the updated control application to the communications apparatus 102 identified by the identification information "T1". Such processing as this is similarly performed when the application identified by the identification information "A2" is updated, and when the application set identified by the identification information "AS2" is updated.

In this manner, according to the state determined from information obtained using information sensed by the sensor of the communications apparatus 102, the information processing system 100 can reflect an application set stored associated with the state, from the information processing apparatus 101.

Thus, the information processing system 100 can reflect an intent of the manager to restrict the communications apparatus to business use, on a process of determining the state of the user and an application set permitted for use under a predetermined state. Consequently, the information processing system 100 can allow the use of only applications that the manager wants to allow the user to use under predetermined states. Further, since only applications that can be used under predetermined states can be selected, there is no confusion on the part of the user in terms of the application that should be used, increasing convenience to the user.

The information processing system 100 causes the information processing apparatus 101 to store applications permitted by the manager for business use of the terminal and reflects on the communications apparatus 102, the stored applications from the information processing apparatus 101 at an arbitrary timing configured by the manager, enabling use of applications that are not already installed.

The information processing system 100 causes the information processing apparatus 101 to store information of applications that the manager wants to prompt the use of on the communications apparatus 102 and reflects on the communications apparatus 102, the stored information from the information processing apparatus 101 at an arbitrary timing configured by the manager. Consequently, through the communications apparatus 102, the information processing system 100 can notify the user of applications that the manager wants to be actively used for determined business uses.

The information processing system 100 divides and processes between the information processing apparatus 101 and the communications apparatus 102, a process for providing a service, enabling increases in the processing load of the information processing apparatus 101 to be suppressed for providing the service.

Thus, since the information processing apparatus 101 need not collect information sensed by the sensor of the communications apparatus 102 and determine whether the communications apparatus 102 has entered a predetermined state, increases in the processing load of the information processing apparatus 101 in providing a service can be suppressed. Since increases in the processing load can be suppressed, the information processing apparatus 101 can suppress increases in the time consumed for processing. The information processing apparatus 101 can further suppress increases in the time consumed from the reception of the identification information of a predetermined state from the communications apparatus 102 until transmission of an application to the communications apparatus 102. Therefore, the information processing apparatus 101 can suppress increases in the time that the user of the communications apparatus 102 waits until the application is executed. Further, the information processing apparatus 101 can suppress increases in cost accompanying increases in processing load.

Since the information processing apparatus 101 suffices to collect the identification information of state of the communications apparatus 102 and needs not collect information sensed by the sensor of the communications apparatus 102, increases in the volume of communication with the communications apparatus 102 can be suppressed. The information processing apparatus 101 can further suppress increases in the volume of communication even when the volume and types of information sensed by the sensor of the communications apparatus 102 become massive. The information processing apparatus 101 can suppress increases in power consumption for communication with the communications apparatus 102.

Since the communications apparatus 102 suffices to transmit to the information processing apparatus 101, identification information of the state of the communications apparatus 102 and needs not transmit to the information processing apparatus 101, information sensed by the sensor of the communications apparatus 102, increases in the volume of communication with the information processing apparatus 101 can be suppressed. Further, the communications apparatus 102 can suppress increases in the communication volume even when the volume and types of information sensed by a sensor of the communications apparatus 102 become massive. The communications apparatus 102 can suppress increases in power consumption for communication with the information processing apparatus 101.

Since the information processing apparatus 101 needs not collect information sensed by the sensor of the communications apparatus 102, increases in the communication load on the 210 network connecting the information processing apparatus 101 and the communications apparatus 102 can be suppressed. Further, since the information processing apparatus 101 suffices to collect identification information of the state of the communications apparatus 102 and needs not collect from the communications apparatus 102, information sensed by the sensor of the communications apparatus 102 and protection of the privacy of the user of the communications apparatus 102 can be facilitated.

The information processing apparatus 101, when detecting updating of the control application, can transmit the updated control application to the communications apparatus 102. Meanwhile, the communications apparatus 102 is able to obtain the latest control application.

### (Control application transmitting process of information processing apparatus 101)

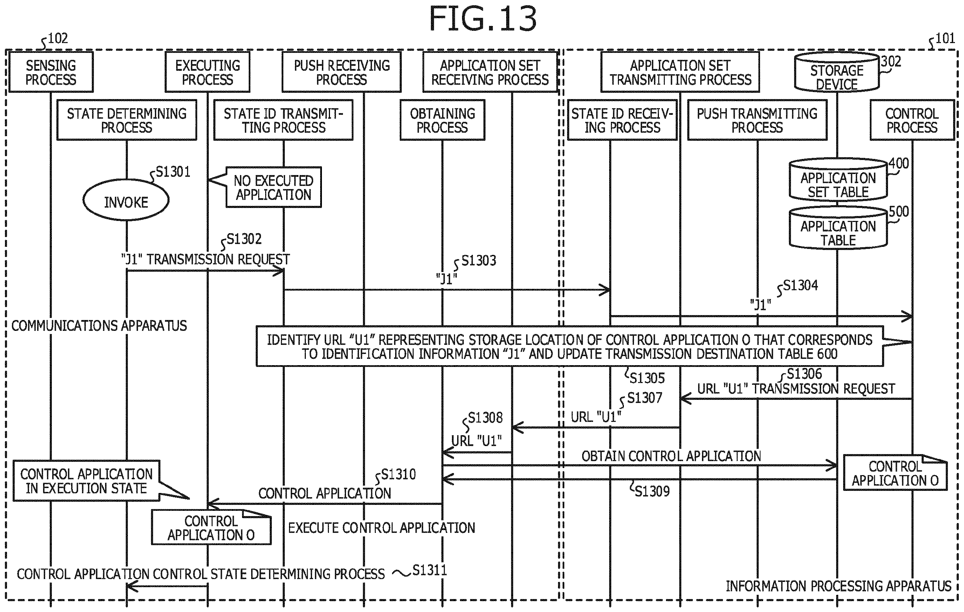

A control application transmitting process of the information processing apparatus 101 in a first example will be described with reference to FIG. 13.

FIG. 13 is a sequence diagram of the control application transmitting process of the information processing apparatus 101. The information processing apparatus 101 executes a state ID receiving process, an application set transmitting process, and a push transmitting process that realize a function corresponding to the communications unit 902. The information processing apparatus 101 executes a control process that realizes a function corresponding to the control unit 903.

The communications apparatus 102 executes a state ID transmitting process that realizes a function corresponding to the transmitting unit 1001. The communications apparatus 102 executes an application set receiving process and a push receiving process that realize a function corresponding to the receiving unit 1002. The communications apparatus 102 executes a sensing process that realizes a function corresponding to the sensing unit 1003. The communications apparatus 102 executes an obtaining process, a state determining process, and an executing process that realize a function corresponding to the execution managing unit 1004.

In the example depicted in FIG. 13, the communications apparatus 102 receives user input, and invokes an application that transmits the identifier of a predetermined state to the information processing apparatus 101 (step S1301).

Here, at the communications apparatus 102, the state determining process transmits to the state ID transmitting process, a transmission request to transmit the identification information "J1" of the state "invoked application" (step S1302). The state ID transmitting process, when receiving the transmission request, transmits the identification information "J1" of the state "invoked application" to the information processing apparatus 101 (step S1303).

At the information processing apparatus 101, the state ID receiving process, when receiving the identification information "J1", transmits the identification information "J1" to the control process (step S1304). The control process, when receiving the identification information "J1", references the application set table 400 and the application table 500, and identifies the URL "U1" representing the storage location of a control application O that corresponds to the identification information "J1". The control process identifies the URL "U1" and updates the transmission destination table 600 (step S1305). The control process transmits a transmission request for the URL "U1" to the application set transmitting process (step S1306). The application set transmitting process, when receiving the transmission request, transmits the URL "U1" to the communications apparatus 102 (step S1307).

At the communications apparatus 102, the application set receiving process, when receiving the URL "U1", transmits the URL "U1" to the obtaining process (step S1308). The obtaining process, when receiving the URL "U1", obtains the control application O based on the URL "U1" (step S1309). The obtaining process transmits the control application O to the executing process (step S1310). The executing process executes the control application O and by the control application O, controls the state determining process (step S1311). The information processing apparatus 101 ends the control application transmitting process.

Thus, the information processing apparatus 101 can cause the communications apparatus 102 to obtain the control application. When the communications apparatus 102 has entered a predetermined state, the information processing apparatus 101 receives from the communications apparatus 102, the identification information of the predetermined state and thereby, is able to detect that the communications apparatus 102 has entered the predetermined state.

### (Application set transmitting process of information processing apparatus 101)

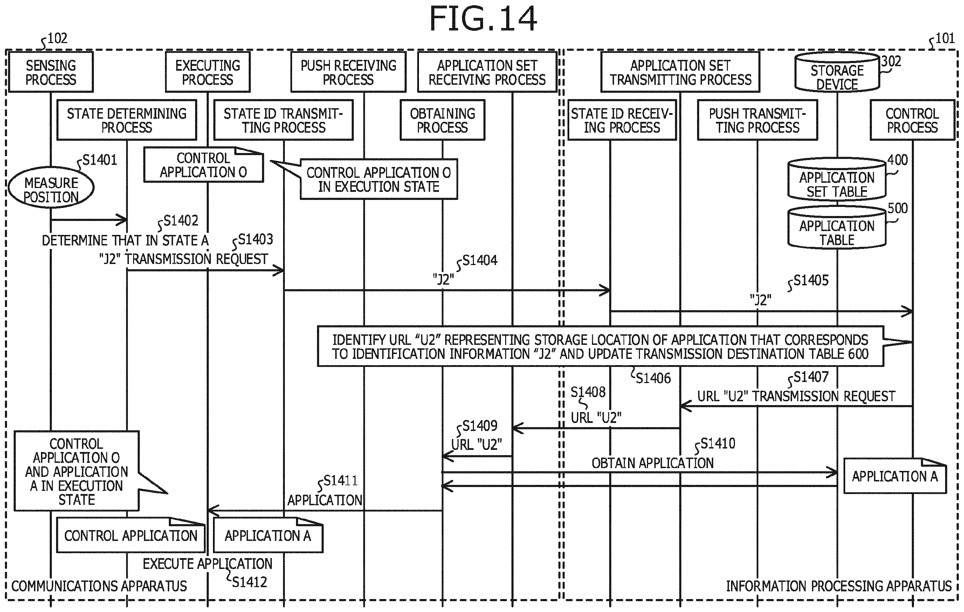

The application set transmitting process of the information processing apparatus 101 in the first example will be described with reference to FIG. 14.

FIG. 14 is a sequence diagram of the application set transmitting process of the information processing apparatus 101. In the example depicted in FIG. 14, at the communications apparatus 102, the sensing process senses the position of the communications apparatus 102 and transmits the sensing result to the state determining process (step S1401). The state determining process, when receiving the sensing result, determines based on the sensing result, whether the communications apparatus 102 is in a state A "within given range from display subject" (step S1402).

If the communications apparatus 102 is in the state A "within given range from display subject", the state determining process transmits a transmission request for the identification information "J2" of the state A "within given range from display subject" to the state ID transmitting process (step S1403). The state ID transmitting process, when receiving the transmission request, transmits the identification information "J2" of the state A "within given range from display subject" to the information processing apparatus 101 (step S1404).

At the information processing apparatus 101, the state ID receiving process, when receiving the identification information "J2", transmits the identification information "J2" to the control process (step S1405). The control process, when receiving the identification information "J2", references the application set table 400 and the application table 500, and identifies the URL "U2" representing the storage location of an application A that corresponds to the identification information "J2". The control process identifies the URL "U2" and updates the transmission destination table 600 (step S1406). The control process transmits a transmission request for the URL "U2" to the application set transmitting process (step S1407). The application set transmitting process, when receiving the transmission request, transmits the URL "U2" to the communications apparatus 102 (step S1408).

At the communications apparatus 102, the application set receiving process, when receiving the URL "U2", transmits the URL "U2" to the obtaining process (step S1409). The obtaining process, when receiving the URL "U2", obtains the application A based on the URL "U2" (step S1410). The obtaining process transmits the application A to the executing process (step S1411). The executing process executes the application A (step S1412). The information processing apparatus 101 ends the application set transmitting process.

Thus, the information processing apparatus 101 can cause the communications apparatus 102 that has entered a predetermined state to obtain one or more applications that correspond to the predetermined state. The communications apparatus 102 can execute the one or more applications that correspond to the state of the communications apparatus 102.

### (Application deleting process of communications apparatus 102)

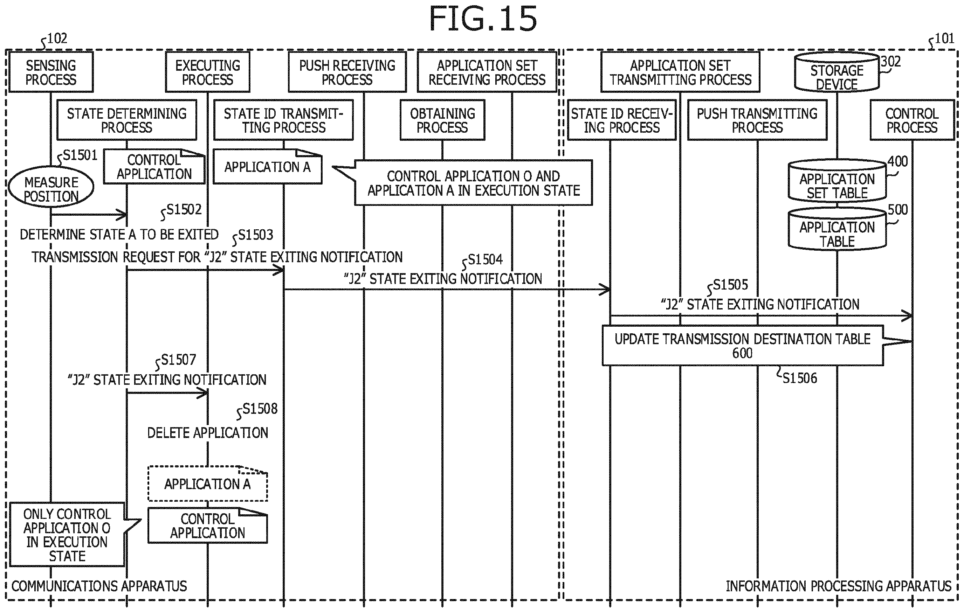

An application deleting process of the communications apparatus 102 in the first example will be described with reference to FIG. 15.

FIG. 15 is a sequence diagram of the application deleting process of the communications apparatus 102. In the example depicted in FIG. 15, at the communications apparatus 102, the sensing process senses the position of the communications apparatus 102 and transmits the sensing result to the state determining process (step S1501). The state determining process, when receiving the sensing result, determines based on the sensing result, whether the communications apparatus 102 is in the state A "within given range from display subject" (step S1502).

If the communications apparatus 102 is no longer in the state A "within given range from display subject", the state determining process transmits to the state ID transmitting process, a transmission request for state exiting notification that indicates that the state is no longer the state A and to which the identification information "J2" of the state A "within given range from display subject" is appended (step S1503). The state ID transmitting process, when receiving the transmission request, transmits to the information processing apparatus 101, the state exiting notification to which the identification information "J2" of the state A "within given range from display subject" is appended (step S1504).

At the information processing apparatus 101, the state ID receiving process, when receiving the state exiting notification to which the identification information "J2" of the state A "within given range from display subject" is appended, transmits to the control process, the state exiting notification to which the identification information "J2" of the state A "within given range from display subject" is appended (step S1505). The control process updates the transmission destination table 600, when receiving the state exiting notification to which the identification information "J2" of the state A "within given range from display subject" is appended (step S1506).

At the communications apparatus 102, the state determining process transmits to the executing process, the state exiting notification to which the identification information "J2" of the state A "within given range from display subject" is appended (step S1507). The executing process deletes the application A, when receiving the state exiting notification to which the identification information "J2" of the state A "within given range from display subject" is appended (step S1508). The communications apparatus 102 ends the application deleting process.

Thus, the communications apparatus 102, under the control of the control application, can delete an application that corresponds to a predetermined state, when the communications apparatus 102 is no longer in the predetermined state, enabling the distribution range of the application to be restricted.

### (Control application updating process of information processing apparatus 101)

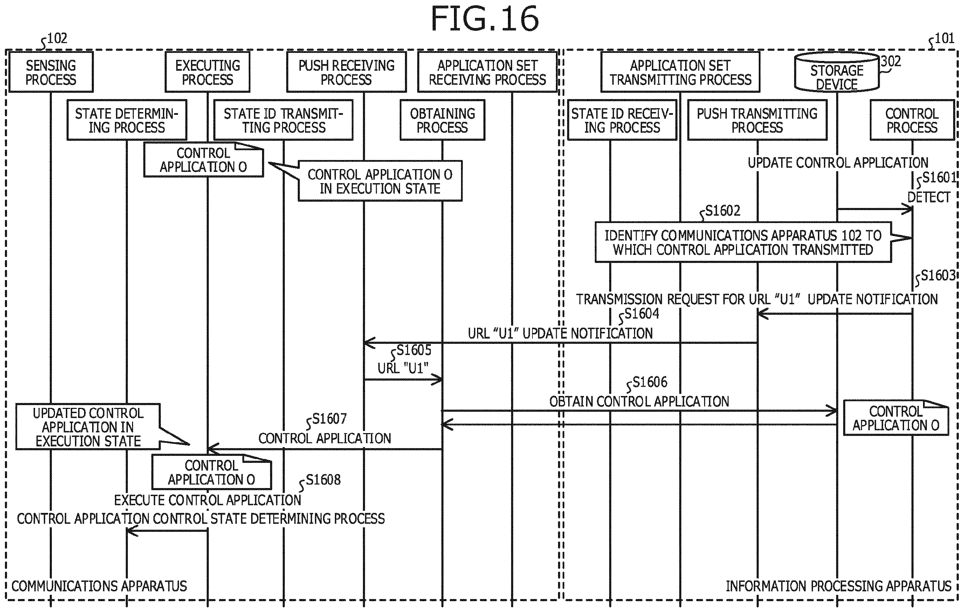

A control application updating process of the information processing apparatus 101 in the first example will be described with reference to FIG. 16.

FIG. 16 is a sequence diagram of the control application updating process of the information processing apparatus 101. In the example depicted in FIG. 16, the control process detects that the control application O has been updated (step S1601). The control process references the transmission destination table 600 and identifies the communications apparatus 102 to which the control application O was transmitted (step S1602).

The control process addresses to the identified communications apparatus 102, a transmission request for update notification concerning the control application O to which the URL "U1" is appended and transmits the transmission request to the push transmitting process (step S1603). The push transmitting process, when receiving the transmission request, transmits to the communications apparatus 102, update notification to which the URL "U1" is appended (step S1604).

At the communications apparatus 102, the push receiving process, when receiving the update notification to which the URL "U1" is appended, transmits the URL "U1" to the obtaining process (step S1605). The obtaining process, when receiving the URL "U1", obtains the updated control application O based on the URL "U1" (step S1606). The obtaining process transmits the updated control application O to the executing process (step S1607). The executing process deletes the control application O executed before updating and executes the updated control application O received (step S1608). The information processing apparatus 101 ends the control application updating process.

Thus, the information processing apparatus 101 can cause the communications apparatus 102 to obtain the updated control application, when the control application has been updated. The communications apparatus 102 can execute the latest control application.

### (Application transmitting process of the information processing apparatus 101 after updating of control application)

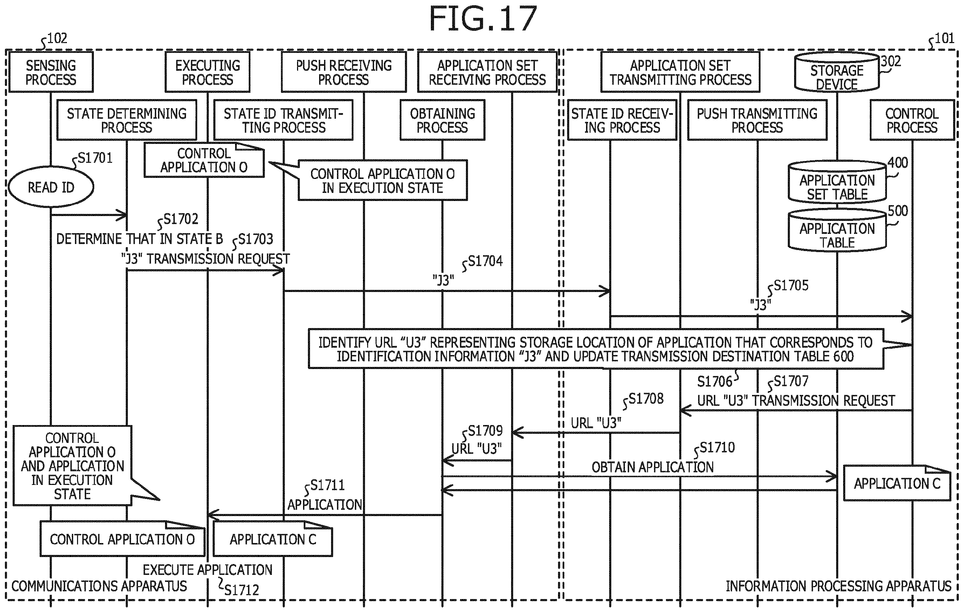

The application transmitting process of the information processing apparatus 101 after updating of the control application in the first example will be described with reference to FIG. 17.

FIG. 17 is a sequence diagram of the application transmitting process of the information processing apparatus 101 after updating of the control application. In the example depicted in FIG. 17, at the communications apparatus 102, the sensing process senses the position of the communications apparatus 102 and transmits a sensing result to the state determining process (step S1701). The state determining process, when receiving the sensing result, determines based on the sensing result, whether the communications apparatus 102 is in a state B "read ID is B" (step S1702).

If the communications apparatus 102 is in the state B "read ID is B", the state determining process transmits a transmission request for the identification information "J3" of the state B "read ID is B" to the state ID transmitting process (step S1703). The state ID transmitting process, when receiving the transmission request, transmits the identification information "J3" of the state B "read ID is B" to the information processing apparatus 101 (step S1704).

At the information processing apparatus 101, the state ID receiving process, when receiving the identification information "J3", transmits the identification information "J3" to the control process (step S1705). The control process, when receiving the identification information "J3", references the application set table 400 and the application table 500, and identifies the URL "U3" representing the storage location of an application C that corresponds to the identification information "J3". The control process identifies the URL "U3" and updates the transmission destination table 600 (step S1706). The control process transmits a transmission request for the URL "U3" to the application set transmitting process (step S1707). The application set transmitting process, when receiving the transmission request, transmits the URL "U3" to the communications apparatus 102 (step S1708).

At the communications apparatus 102, the application set receiving process, when receiving the URL "U3", transmits the URL "U3" to the obtaining process (step S1709). The obtaining process, when receiving the URL "U3", obtains the application C based on the URL "U3" (step S1710). The obtaining process transmits the application C to the executing process (step S1711). The executing process executes the application C (step S1712). The information processing apparatus 101 ends the application set transmitting process.

Thus, the information processing apparatus 101 can cause the communications apparatus 102 that has entered a predetermined state to obtain an application that corresponds to the predetermined state. The communications apparatus 102 can execute an application that corresponds to the state of the communications apparatus 102.

### (Second operation example of information processing system 100)

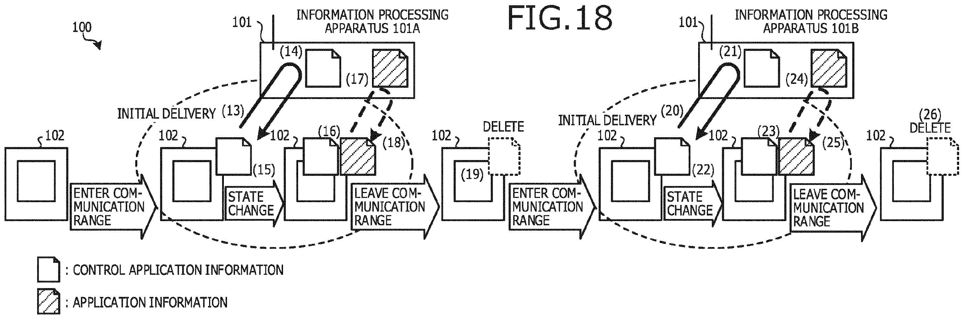

A second operation example of the information processing system 100 will be described with reference to FIG. 18.

FIG. 18 is a diagram depicting the second operation example of the information processing system 100. In the example depicted in FIG. 18, an information processing apparatus 101A and an information processing apparatus 101B communicate with only communications apparatuses within a limited communication range from the information processing apparatus 101A and the information processing apparatus 101B. The information processing apparatus 101A and the information processing apparatus 101B, for example, have and use a wireless LAN access point function, and regard only the communications apparatuses within the communication range to be communication counterparts.
(13) The communications apparatus 102 receives operational input from the user of the communications apparatus 102, and invokes an application that transmits the identification information of a predetermined state to the information processing apparatus 101. The communications apparatus 102, by the invoked application, transmits the identification information "J1" of a state "entered communication range" to the information processing apparatus 101A, when moving into the communication range of the information processing apparatus 101A.
(14) The information processing apparatus 101A, when receiving the identification information "J1" of the state from the communications apparatus 102, identifies a record that is stored in the application set table 400 and has the identification information "J1" of the state "entered communication range" set in the state ID field.

Subsequently, the information processing apparatus 101A extracts the application set identifier "AS1" set in the application set ID field included in the record. The information processing apparatus 101A extracts the control application identifier "A1" set in the application ID field included in the record. The information processing apparatus 101A further identifies a record that is stored in the application table 500 and has the application identifier "A1" stored in the application ID field.

Subsequently, the information processing apparatus 101A extracts the URL "U1" that is set in the URL field of the record and the represents the storage location of the control application. The information processing apparatus 101A, via the WLAN I/F 706, transmits the URL "U1" representing the storage location of the control application to the communications apparatus 102.

Here, the information processing apparatus 101A identifies a record that is stored in the transmission destination table 600 and has the application set identification information "AS1" set in the application set ID field. The information processing apparatus 101A adds to the transmission destination field of the record, the identification information "T1" of the communications apparatus 102 to which the URL representing the storage location of the control application was transmitted.
(15) The communications apparatus 102, when receiving the URL, obtains the control application from the storage location represented by the URL, and executes the control application. (16) The communications apparatus 102, consequent to executing the control application, determines based on the information sensed by the sensor 710 of the communications apparatus 102, whether the communications apparatus 102 has entered the state "within a given range from display subject". The communications apparatus 102, when having entered the state "within a given range from display subject", transmits the identification information "J2" of the state "within a given range from display subject" to the information processing apparatus 101A.
(17) The information processing apparatus 101A, when receiving the identification information "J2" of the state "within a given range from display subject" from the communications apparatus 102, identifies a record that is stored in the application set table 400 and has the identification information "J2" set in the state ID field.

Subsequently, the information processing apparatus 101A extracts the application set identifier "AS2" set in the application set ID field included in the record. The information processing apparatus 101A further extracts the application identifier "A2" set in the application ID field of the record. The information processing apparatus 101A identifies a record that is stored in the application table 500 and has the application identifier "A2" set in the application ID field.

Subsequently, the information processing apparatus 101A extracts the URL "U2" that is set in the URL field of the record and represents the storage location of an application to be executed by the communications apparatus 102 when the communications apparatus 102 enters the state "within a given range from display subject". The information processing apparatus 101A, by the WLAN I/F 706, transmits the URL "U2" representing the storage location of the application to the communications apparatus 102.

Here, the information processing apparatus 101A identifies a record that is stored in the transmission destination table 600 and has the application set identification information "AS2" set in the application set ID field. The information processing apparatus 101A adds to the transmission destination field included in the record, the identification information "T1" of the communications apparatus 102 to which the URL representing the storage location of the application was transmitted.

(18) The communications apparatus 102 receives from the information processing apparatus 101A, the URL that represents the storage location of the application that corresponds to the state "within a given range from display subject". Next, the communications apparatus 102 obtains the application from the storage location represented by the URL and executes the application.

Here, the communications apparatus 102 moves outside the communication range of the information processing apparatus 101A. (19) The communications apparatus 102, when moving outside the communication range of the information processing apparatus 101A, deletes the control application and the application.
(20) The communications apparatus 102, when moving into the communication range of the information processing apparatus 101B, transmits to the information processing apparatus 101B, a connection request that includes the identification information "J1" of the state "entered communication range".
(21) The information processing apparatus 101B, when receiving from the communications apparatus 102, the identification information "J1" of the state, identifies a record that is stored in the application set table 400 and has the identification information "J1" of the state "invoked application" set in the state ID field. Next, the information processing apparatus 101B extracts the application set identifier "AS1" set in application set ID field included in the record. The information processing apparatus 101B further extracts the control application identifier "A1" set in the application ID field of the record.

The information processing apparatus 101B identifies a record that is stored in the application table 500 and has the application identifier "A1" set in the application ID field. Next, the information processing apparatus 101B extracts the URL "U1" that is set in the URL field of the record and that represents the storage location of the control application. The information processing apparatus 101B, by the WLAN I/F 706, transmits the URL "U1" representing the storage location of the control application to the communications apparatus 102.

Here, the information processing apparatus 101B identifies a record that is stored in the transmission destination table 600 and has the application set identification information "AS1" set in the application set ID field. The information processing apparatus 101B further adds to the transmission destination field included in the record, the identification information "T1" of the communications apparatus 102 to which the URL representing the storage location of the control application was transmitted.
(22) The communications apparatus 102, when receiving the URL, obtains the control application from the storage location represented by the URL, and executes the control application. (23) The communications apparatus 102, consequent to executing the control application, determines based on the information sensed by the sensor 710 of the communications apparatus 102, whether the communications apparatus 102 has entered the state the state "read ID of ID reader is B". The communications apparatus 102, when determining that the communications apparatus 102 has entered the state "read ID of ID reader is B", transmits the identification information "J3" of the state "read ID of ID reader is B" to the information processing apparatus 101B.
(24) The information processing apparatus 101B, when receiving from the communications apparatus 102, the identification information "J3" of the state "read ID of ID reader is B", identifies a record that is stored in the application set table 400 and has the identification information "J3" set in state ID field. Next, the information processing apparatus 101B extracts the application set identifier "AS3" set in the application set ID field included in the record. The information processing apparatus 101B further extracts the application identifier "A3" set in the application ID field included in the record. The information processing apparatus 101B further identifies a record that is stored in the application table 500 and has the application identifier "A3" set in the application ID field. Next, the information processing apparatus 101B extracts the URL "U3" that is set in the URL field of the record and that represents the storage location of an application that is to be executed by the communications apparatus 102 when the communications apparatus 102 enters the state "within a given range from display subject". The information processing apparatus 101B, by the WLAN I/F 706, transmits the URL "U3" representing the storage location of the application to the communications apparatus 102.

Here, the information processing apparatus 101B identifies a record that is stored in the transmission destination table 600 and has the application set identification information "AS3" set in the application set ID field. The information processing apparatus 101B adds in the transmission destination field included in the record, the identification information "T1" of the communications apparatus 102 to which the URL representing the storage location of the application was transmitted.

(25) The communications apparatus 102 receives from the information processing apparatus 101B, the URL representing the storage location of the application that corresponds to the state "read ID of ID reader is B". Next, the communications apparatus 102 obtains an application from the storage location represented by the URL and executes the application.

Here, the communications apparatus 102 moves outside the communication range of the information processing apparatus 101B. (26) The communications apparatus 102, when moving outside the communication range of the information processing apparatus 101B, deletes the control application and the application.

In this manner, according to the state determined from information obtained using information sensed by the sensor of the field communications apparatus 102, the information processing system 100 can reflect an application set stored associated with the state, from the field information processing apparatus 101.

Thus, the information processing system 100 can reflect an intent of the manager to restrict the communications apparatus to business use, on a process of determining the state of the user and an application set permitted for use under a predetermined state. Consequently, the information processing system 100 can allow the use of only applications that the manager wants to allow the user to use under a predetermined state. Further, since only applications that can be used under that state can be selected, there is no confusion on the part of the user in terms of the application that should be used, enhancing convenience to the user.

The information processing system 100 causes the information processing apparatus 101 to store applications permitted by the manager for business use of the terminal and reflects on the communications apparatus 102, the stored applications from the information processing apparatus 101 at an arbitrary timing configured by the manager, enabling use of applications that are not already installed.

The information processing system 100 causes the information processing apparatus 101 to store information of applications that the manager wants to prompt the use of on the communications apparatus 102 and reflects on the communications apparatus 102, the stored information from the information processing apparatus 101 at an arbitrary timing configured by the manager. Consequently, through the communications apparatus 102, the information processing system 100 can notify the user of applications that the manager wants to be actively used for determined business uses.

The information processing system 100 can enhance the convenience to the user and the field manager, even in business situations where the state of the field in which user is present constantly changes. The information processing system 100, for example, can reflect application set changes on the communications apparatus 102 used by a user in the field, according to changes made by the field manager in response to state changes in the field. Consequently, the information processing system 100 can instantaneously reflect field changes on the communications apparatus 102, enabling the convenience of the field manager and the user to be enhanced.

The information processing system 100 divides and processes between the information processing apparatus 101 and the communications apparatus 102, a process for providing a service, thereby enabling increases in the processing load of the information processing apparatus 101 to be suppressed for providing the service.

Thus, the information processing apparatus 101A and the information processing apparatus 101B need not collect information sensed by the sensor of the communications apparatus 102 and determine whether the communications apparatus 102 has entered a predetermined state. Therefore, the information processing apparatus 101A and the information processing apparatus 101B can suppress increases in the processing load of the information processing apparatus 101 in providing a service. Further, since the information processing apparatus 101A and the information processing apparatus 101B can suppress increases in the processing load, the time consumed for processing can be suppressed. The information processing apparatus 101A and the information processing apparatus 101B can further suppress increases in the time consumed from the reception of the identification information of a predetermined state from the communications apparatus 102 until transmission of an application to the communications apparatus 102. Therefore, the information processing apparatus 101A and the information processing apparatus 101B can suppress increases in the time that the user of the communications apparatus 102 waits until the application is executed. The information processing apparatus 101A and the information processing apparatus 101B can further suppress increases in cost accompanying increases in processing load.

Since the information processing apparatus 101A and the information processing apparatus 101B suffice to collect the identification information of the state of the communications apparatus 102 and need not collect information sensed by the sensor of the communications apparatus 102, increases in the volume of communication with the communications apparatus 102 can be suppressed. The information processing apparatus 101A and the information processing apparatus 101B can further suppress increases in the volume of communication even when the volume and types of information sensed by the sensor of the communications apparatus 102 become massive. The information processing apparatus 101A and the information processing apparatus 101B can suppress increases in power consumption for communication with the communications apparatus 102.

Since the communications apparatus 102 suffices to transmit the identification information of the state of the communications apparatus 102 to the information processing apparatus 101A and the information processing apparatus 101B, the information sensed by the sensor of the communications apparatus 102 need not be transmitted to the information processing apparatus 101A or the information processing apparatus 101B. Therefore, the communications apparatus 102 can suppress increases in the volume of communication between the information processing apparatus 101A and the information processing apparatus 101B. The communications apparatus 102 can suppress increases in the volume of communication even when the volume and types of information sensed by the sensor of the communications apparatus 102 become massive. The communications apparatus 102 can suppress increases in power consumption for communication with the information processing apparatus 101A and the information processing apparatus 101B.

The information processing apparatus 101A and the information processing apparatus 101B need not collect information sensed by the sensor of the communications apparatus 102. Therefore, the information processing apparatus 101A and the information processing apparatus 101B can suppress increases in the communication load on the network 210 connecting the communications apparatus 102 with the information processing apparatus 101A and the information processing apparatus 101B. Further, the information processing apparatus 101A and the information processing apparatus 101B suffice to collect the identification information of the state of the communications apparatus 102, the information sensed by the sensor of the communications apparatus 102 need not be collected. Therefore, the information processing apparatus 101A and the information processing apparatus 101B can facilitate protection of the privacy of the user of the communications apparatus 102.

The control application stored in the information processing apparatus 101A and the information processing apparatus 101B suffices to be targeted only in a state within a communicable range of the information processing apparatus 101A and the information processing apparatus 101B, enabling the storage area of each information processing apparatus to be reduced.

The information processing apparatus 101A and the information processing apparatus 101B, when detecting that the control application has been updated, can transmit the updated control application to the communications apparatus 102. Meanwhile, the communications apparatus 102 can obtain the latest control application. The communications apparatus 102, when moving outside the communication range of the information processing apparatus 101A and the information processing apparatus 101B, can delete the application received from the information processing apparatus 101, enabling the distribution range of the application to be restricted.

(Control application transmitting process of information processing apparatus 101A and information processing apparatus 101B)

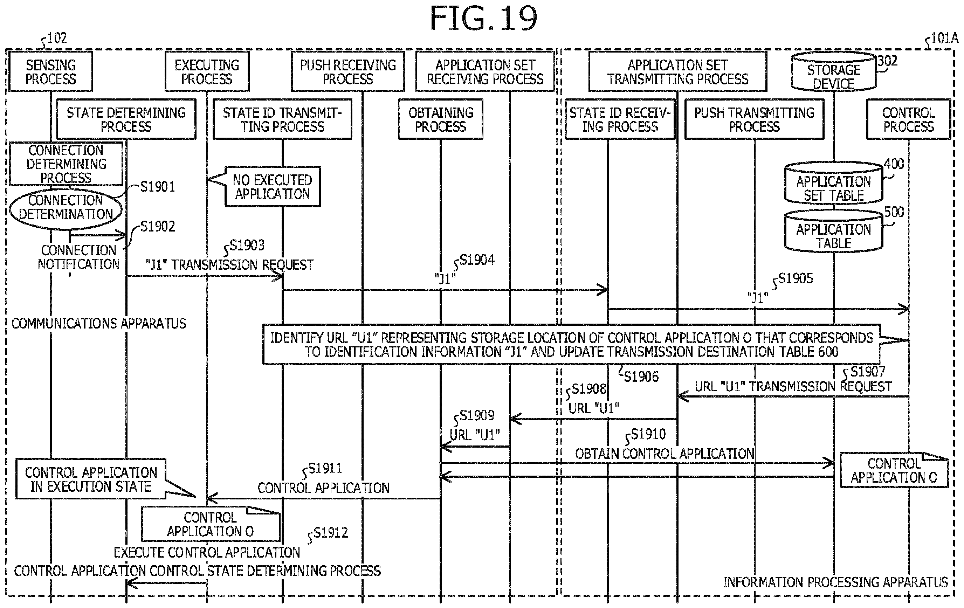

The control application transmitting process of the information processing apparatus 101A and the information processing apparatus 101B in the second example will be described with reference to FIG. 19. The process at the information processing apparatus 101A and the information processing apparatus 101B is the same and therefore, the information processing apparatus 101A will be used in the description.

FIG. 19 is a sequence diagram of the control application transmitting process of the information processing apparatus 101. The information processing apparatus 101A executes the state ID receiving process, the application set transmitting process, and the push transmitting process that realize a function corresponding to the communications unit 902. Further, the information processing apparatus 101A executes the control process that realizes a function corresponding to the control unit 903.

The communications apparatus 102 executes the state ID transmitting process that realizes a function corresponding to the transmitting unit 1001. The communications apparatus 102 further executes the application set receiving process and the push receiving process that realize a function corresponding to the receiving unit 1002. The communications apparatus 102 executes the sensing process that realizes a function corresponding to the sensing unit 1003. The communications apparatus 102 further executes the obtaining process, the state determining process, the executing process, and a connection determining process that realize a function corresponding to the execution managing unit 1004.

In the example depicted in FIG. 19, the communications apparatus 102 invokes an application that transmits the identifier of a predetermined state to the information processing apparatus 101A. Here, at the communications apparatus 102, the connection determining process determines entrance into the communication range of the information processing apparatus 101A and connection to the information processing apparatus 101A (step S1901). The connection determining process transmits to the state determining process, connection notification indicating connection to the information processing apparatus 101A (step S1902).

The state determining process, when receiving the connection notification, transmits to the state ID transmitting process, a transmission request to transmit the identification information "J1" of the state "entered communication range" to the information processing apparatus 101A (step S1903). The state ID transmitting process, when receiving the transmission request, transmits the identification information "J1" of the state "entered communication range" to the information processing apparatus 101A (step S1904).

At the information processing apparatus 101A, the state ID receiving process, when receiving the identification information "J1", transmits the identification information "J1" to the control process (step S1905). The control process, when receiving the identification information "J1", references the application set table 400 and the application table 500, and identifies the URL "U1" representing the storage location of the control application O that corresponds to the identification information "J1". The control process identifies the URL "U1" and updates the transmission destination table 600 (step S1906). The control process transmits a transmission request for the URL "U1" to the application set transmitting process (step S1907). The application set transmitting process, when receiving the transmission request, transmits the URL "U1" to the communications apparatus 102 (step S1908).

At the communications apparatus 102, the application set receiving process, when receiving the URL "U1", transmits the URL "U1" to the obtaining process (step S1909). The obtaining process, when receiving the URL "U1", obtains the control application O based on the URL "U1" (step S1910). The obtaining process transmits the control application O to the executing process (step S1911). The executing process executes the control application 0 (step S1912). The information processing apparatus 101 ends the control application transmitting process.

Thus, the information processing apparatus 101 can cause only the communications apparatus 102 that has entered the communication range of the information processing apparatus 101 to obtain the control application. The communications apparatus 102 can execute the control application only when having entered the communication range of the information processing apparatus 101. Therefore, the information processing apparatus 101 can restrict the distribution range of the control application.

### (Application set transmitting process of information processing apparatus 101A and information processing apparatus 101B)

The application set transmitting process of the information processing apparatus 101A and the information processing apparatus 101B in the second example will be described. The application set transmitting process of the information processing apparatus 101A and the information processing apparatus 101B in the second example is the same as the application set transmitting process depicted in FIG. 14. Therefore, detailed description of the application set transmitting process of the information processing apparatus 101A and the information processing apparatus 101B in the second example will be omitted hereinafter.

### (Application deleting process of communications apparatus 102)

The application deleting process of the communications apparatus 102 in the second example will be described. The application deleting process of the communications apparatus 102 in the second example is the same as the application deleting process depicted in FIG. 15. Therefore, detailed description of the application deleting process of the communications apparatus 102 in the second example will be omitted hereinafter.

### (Control application updating process of information processing apparatus 101A and information processing apparatus 101B)

The control application updating process of the information processing apparatus 101A and the information processing apparatus 101B in the second example will be described. The control application updating process of the information processing apparatus 101A and the information processing apparatus 101B in the second example is the same as the control application updating process depicted in FIG. 16. Therefore, detailed description of the control application updating process of the information processing apparatus 101A and the information processing apparatus 101B in the second example will be omitted hereinafter.

### (Application transmitting process of information processing apparatus 101A and information processing apparatus 101B after updating of control application)

The application transmitting process of the information processing apparatus 101A and the information processing apparatus 101B after updating of the control application in the second example will be described. The application transmitting process of the information processing apparatus 101A and the information processing apparatus 101B after updating of the control application in the second example is the same as the application transmitting process depicted in FIG. 17. Therefore, detailed description of the application transmitting process of the information processing apparatus 101 after updating of the control application in the second example will be omitted hereinafter.

### (Control application deleting process of communications apparatus 102)

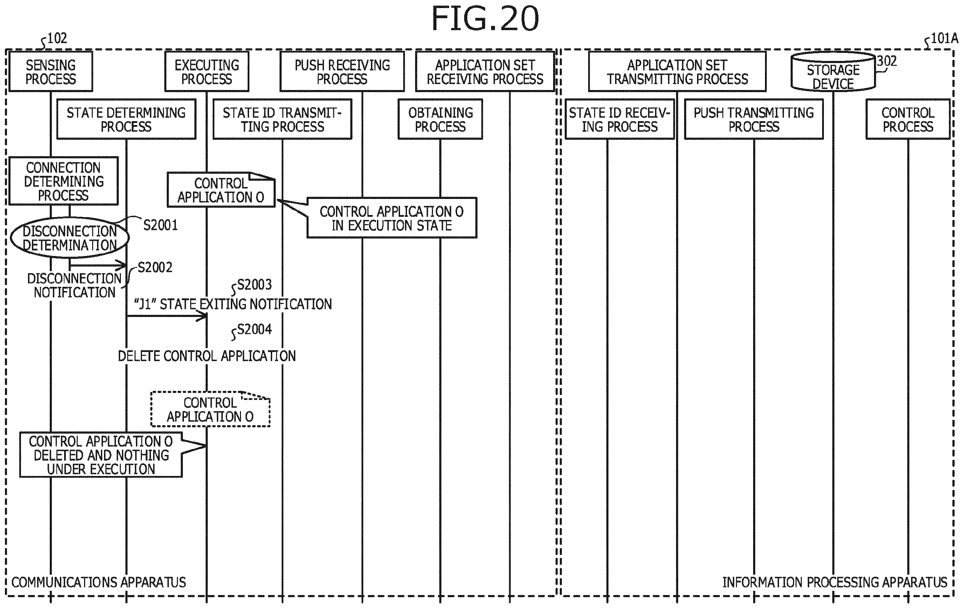

A control application deleting process of the communications apparatus 102 in the second example will be described with reference to FIG. 20. The process at the information processing apparatus 101A and the information processing apparatus 101B is the same and therefore, the information processing apparatus 101A will be used in the description.

FIG. 20 is a sequence diagram of the control application deleting process of the communications apparatus 102. In the example depicted in FIG. 20, at the communications apparatus 102, the connection determining process determines that the connection to the information processing apparatus 101A has been lost (step S2001). The connection determining process transmits to the state determining process, disconnection notification indicating that the connection has been lost (step S2002). The state determining process, when receiving the disconnection notification, transmits to the executing process, state exiting notification appended with the identification information "J1" of the state "entered communication range" (step S2003). The executing process, when receiving the state exiting notification appended with the identification information "J1", deletes the control application O (step S2004). The communications apparatus 102 ends the control application deleting process.

Thus, the communications apparatus 102, under the control of the control application, can delete the control application when having moved from inside the communication range to outside the communication range of the information processing apparatus 101. The communications apparatus 102 can restrict the distribution range of the control application.

As described, according to the information processing system 100, constraints set by the manager concerning business use of the communications apparatus 102 are stored by the information processing apparatus 101 and the stored constraints can be reflected on the communications apparatus 102 from the information processing apparatus 101 at an arbitrary timing set by the manager. Thus, according to the information processing system 100, constraints for business use of the communications apparatus 102 can be reflected flexibly and quickly on the communications apparatus 102 at an arbitrary timing set by the manager.

Corresponding to the state determined from information obtained using information sensed by the sensor of the communications apparatus 102, the information processing system 100 can reflect from the information processing apparatus 101, an application set stored associated with the state.

Thus, the information processing system 100 can reflect an intent of the manager to restrict the communications apparatus to business use, on a process of determining the state of the user and an application set permitted for use under a predetermined state. Consequently, the information processing system 100 can allow the use of only applications that the manager wants to allow the user to use under predetermined states. Further, since only applications that can be used under predetermined states can be selected, there is no confusion on the part of the user in terms of the application that should be used, increasing convenience to the user.

The information processing system 100 causes the information processing apparatus 101 to store applications permitted by the manager for business use of the terminal and reflects on the communications apparatus 102, the stored applications from the information processing apparatus 101 at an arbitrary timing configured by the manager, enabling use of applications that are not already installed.

The information processing system 100 causes the information processing apparatus 101 to store information of applications that the manager wants to prompt the use of on the communications apparatus 102 and reflects on the communications apparatus 102, the stored information from the information processing apparatus 101 at an arbitrary timing configured by the manager. Consequently, through the communications apparatus 102, the information processing system 100 can notify the user of applications that the manager wants to be actively used for determined business uses.

The information processing system 100 can enhance the convenience to the user and the field manager, even in business situations where the state of the field in which user is present constantly changes. The information processing system 100, for example, can reflect application set changes on the communications apparatus 102 used by the user in the field, according to changes made by the field manager in response to state changes in the field. Consequently, the information processing system 100 can instantaneously reflect field changes on the communications apparatus 102, enabling the convenience of the field manager and the user to be enhanced.

The information processing system 100 divides and processes between the information processing apparatus 101 and the communications apparatus 102, a process for providing a service. Consequently, the information processing system 100 can suppress increases in the processing load of the information processing apparatus 101 for providing the service.

The information processing apparatus 101 can transmit an application set to the communications apparatus 102 connected to the information processing apparatus 101. Consequently, the information processing apparatus 101, by a determination process of the communications apparatus 102, can receive from the communications apparatus 102, identification information indicating that the communications apparatus 102 has entered a predetermined state. The information processing apparatus 101, by receiving the identification information of the predetermined state, can detect that the communications apparatus 102 has entered the predetermined state.

Further, the information processing apparatus 101 can transmit an application set that includes the control application to the communications apparatus 102 connected to the information processing apparatus 101. Consequently, the information processing apparatus 101, by controlling the communications apparatus 102 via the control application, can received from the communications apparatus 102, identification information indicating that the communications apparatus 102 entered a predetermined state. The information processing apparatus 101, by receiving the identification information of the predetermined state, can detect that the communications apparatus 102 entered the predetermined state.

The information processing apparatus 101 suffices to collect the identification information of the state of the communications apparatus 102 and needs not collect the information sensed by the sensor of the communications apparatus 102 and therefore, increases in the volume of communication with the communications apparatus 102 can be suppressed. The information processing apparatus 101 can further suppress increases in the volume of communication even when the volume and types of information sensed by the sensor of the communications apparatus 102 become massive. The information processing apparatus 101 can suppress increases in power consumption for communication with the communications apparatus 102.

Since the communications apparatus 102 suffices to transmit to the information processing apparatus 101, identification information of the state of the communications apparatus 102 and needs not transmit to the information processing apparatus 101, information sensed by the sensor of the communications apparatus 102, increases in the volume of communication with the information processing apparatus 101 can be suppressed. Further, the communications apparatus 102 can suppress increases in the communication volume even when the volume and types of information sensed by a sensor of the communications apparatus 102 become massive. The communications apparatus 102 can suppress increases in power consumption for communication with the information processing apparatus 101. Since the information processing apparatus 101 needs not collect information sensed by the sensor of the communications apparatus 102, increases in the communication load on a network connecting the information processing apparatus 101 and the communications apparatus 102 can be suppressed.

Further, the information processing apparatus 101, when receiving the identification information of a predetermined state, can identify an application set associated with the identification information of the predetermined state, stored in the application set table 400 and the application table 500. The information processing apparatus 101 can transmit the application set to the communications apparatus 102. Consequently, the information processing apparatus 101 can transmit to the communications apparatus 102, an application set that includes information of one or more applications to be executed by the communications apparatus 102 when the communications apparatus 102 enters the predetermined state. The communications apparatus 102, when entering the predetermined state, receives the application set that corresponds to the predetermined state and can obtain and execute one or more applications.

The information processing apparatus 101 can store to the transmission destination table 600, the identification information of the communications apparatus 102 to which the application set that corresponds to the predetermined state was transmitted. The information processing apparatus 101 references the transmission destination table 600 and when the application set has been updated, can transmit the updated application set to the communications apparatus 102. Consequently, the information processing apparatus 101, in response to an updating of an application, can push transmission of the application without waiting for a request from the communications apparatus 102, enabling the application that is to be executed by the communications apparatus 102 to be the latest application. The communications apparatus 102 can prevent cases where the latest application cannot be received.

The information processing apparatus 101 can record in the transmission destination table 600, the identification information of the communications apparatus 102 to which the application set that includes the control application was transmitted. The information processing apparatus 101 references the transmission destination table 600 and in response to an updating of the application set that includes the control application, can transmit the updated application set that includes the control application, to the communications apparatus 102. Consequently, the information processing apparatus 101, in response to an updating of the control application, can push the transmission of the control application without waiting for a request from the communications apparatus 102, enabling the application that is to be executed by the communications apparatus 102 to be the latest version of the application. The communications apparatus 102 can prevent cases where an application that is to be executed in a state when added by updating cannot be received consequent to a control application that is not the latest version being executed, and where the latest version of the application cannot be received.

The information processing apparatus 101 can communicate directly with the communications apparatus 102 in the communication range of the information processing apparatus 101. Consequently, the information processing apparatus 101 can transmit the control application and applications to only the communications apparatuses 102 that are within the communication range enabling direct communication and can restrict the distribution range of the control application and applications.

The control application, corresponding to when the communications apparatus 102 is no longer present within the communication range of the information processing apparatus 101, may realize a function of deleting the control application and an application. Consequently, the information processing apparatus 101 can restrict the distribution range of the control application and an application, by causing the communications apparatus 102 that has left the communication range of the information processing apparatus 101 to delete the control application and an application.

The control application, corresponding to when the communications apparatus 102 is no longer in a predetermined state after receiving application information, may have a function of deleting the application. Consequently, corresponding to the communications apparatus 102 no longer being in a state where the communications apparatus 102 is to execute an application, the information processing apparatus 101 can cause the communications apparatus 102 to delete the application, enabling the distribution range of the application to be restricted.

The information processing apparatus 101, corresponding to a case where the identification information for plural states is received, can transmit to the communications apparatus 102, an application set that is associated with the identification information of any of the states and stored in the application set table 400 and the application table 500. Consequently, the information processing apparatus 101 can transmit to the communications apparatus 102 that when entering each state among plural states, an application set that is to be executed by the communications apparatus 102 and that has been selected from among application sets that correspond to the plural states. The communications apparatus 102, when entering each of the plural states, can receive an application set corresponding to the state and execute the application.

The application may further realize a function of determining among plural states, whether the communications apparatus 102 has entered any of the states, and when the communications apparatus 102 has entered any of the states, transmitting the identification information of any of the states entered to the information processing apparatus 101. Consequently, the information processing apparatus 101 can determine the state of the communications apparatus 102 in steps and can transmit applications to the communications apparatus 102 in steps.

More specifically, an example of a case where an application has an input column for facility inspection and corresponding to a setting of a failure as an inspection result in the input column, the communications apparatus 102 transmits the identification information of a state "inspected faulty facility" to the information processing apparatus 101 will be described. In this case, the information processing apparatus 101 receives the identification information of the state "inspected faulty facility". The information processing apparatus 101 can transmit a new application having an input column for a detailed inspection to the communications apparatus 102; transmit a new application representing facility repair details to the communications apparatus 102, etc.

The information processing apparatus 101 needs not collect the information sensed by the sensor of the communications apparatus 102 to determine whether the communications apparatus 102 has entered a predetermined state and therefore, increases in the processing load of the information processing apparatus 101 for providing a service can be suppressed. In other words, even when the number of the communications apparatuses 102 transmitting information to the information processing apparatus 101 increases, increases in the processing load of the information processing apparatus 101 can be suppressed.

The information processing apparatus 101 can suppress increases in the processing load and therefore, can suppress increases in the time consumed for processing. The information processing apparatus 101 an further suppress increases in the time consumed from reception of the identification information of the predetermined state from the communications apparatus 102 until transmission of an application to the communications apparatus 102. As a result, the information processing apparatus 101 can suppress increases in the time that the user of the communications apparatus 102 waits until the application is executed. Further, the information processing apparatus 101 can suppress increases in cost accompanying increases in processing load.

Here, it is conceivable that a conventional information processing apparatus pre-installs an application in a conventional communications apparatus and performs management based on whether the installation of other applications is not permitted. Nonetheless, in this case, the conventional communications apparatus has to pre-install corresponding to all business situations, applications to be used and has to allow the use of an application for which permitting use under a given situation is not desirable. In contrast, the information processing apparatus 101 of the present invention reflects on the communications apparatus 102, an application set for which use is permitted only when the communications apparatus 102 has entered a predetermined state. Consequently, with respect to the communications apparatus 102, the information processing apparatus 101 of the present invention can install and delete an application as necessary according to the subdivided work task, and configure operation such as permitting or prohibiting use, prompting use, etc.

Here, each time an application is installed in the conventional communications apparatus, the conventional information processing apparatus references management information to confirm the necessity of an application and thereby, perform management of monitoring the installation of unnecessary applications and detecting use for unintended purposes. Nonetheless, in this case, since the determination of whether the installation of an application is necessary is based on information determined by the manager, for each application installation, new information indicating the necessity as determined by the manager has to be referenced and further burden related to application installation arises. In contrast, the information processing apparatus 101 of the present invention reflects an application set permitted by the manager for use on the communications apparatus 102, whereby determination of the necessity becomes unnecessary, eliminating the burden related to application installation.

Here, it is conceivable that the conventional information processing apparatus collects at a constant interval, sensing information sensed by a sensor of the conventional communications apparatus, and determines whether the conventional communications apparatus has entered a predetermined state. Nonetheless, in this case, when the conventional communications apparatus increases the type of information to be transmitted to the conventional information processing apparatus or increases the frequency at which the conventional communications apparatus transmits information to the conventional information processing apparatus, the processing load of the conventional information processing apparatus increases. In contrast, the information processing apparatus 101 of the present invention causes the communications apparatus 102 to transmit to the information processing apparatus 101, the identification information of a predetermined state only when the communications apparatus 102 has entered the predetermined state, whereby increases in the processing load of the information processing apparatus 101 can be suppressed.

Here, it is conceivable that the conventional information processing apparatus collects at constant intervals, position information of the conventional communications apparatus and determines whether the conventional communications apparatus has entered a predetermined state. Nonetheless, in this case, the user of the information processing apparatus can identify the movement path of the user of the conventional communications apparatus. In contrast, the information processing apparatus 101 of the present invention causes the communications apparatus 102 to transmit to the information processing apparatus 101, the identification information of a predetermined state only when the communications apparatus 102 has entered the predetermined state, enabling protection of the privacy of the user of the communications apparatus 102 to be facilitated.

Here, it is conceivable that the communications apparatus pre-stores applications corresponding to each state among plural states. Nonetheless, in this case, the utilization volume of the storage area of the conventional communications apparatus increases. For example, when the conventional communications apparatus is an apparatus for inspecting plural facilities and the inspection items differ for each facility among the plural facilities, an application having input columns for the different inspection items according to facility is stored, whereby the utilization volume of the storage area increases. In contrast, the information processing apparatus 101 of the present invention can transmit to the communications apparatus 102, an application that corresponds to a predetermined state when the communications apparatus 102 has entered the predetermined state. For example, when the communications apparatus 102 is inspecting each facility, applications corresponding to the respective facilities can be sequentially transmitted, enabling increases in the utilization volume of the storage area to be suppressed.

The information processing method described in the present embodiment may be implemented by executing a prepared program on a computer such as a personal computer and a workstation. The information processing program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: information processing apparatus
- 102: communications apparatus
- 901: storage unit
- 902: communications unit
- 903: control unit
- 1001: transmitting unit
- 1002: receiving unit
- 1003: sensing unit
- 1004: execution managing unit
- 1005: output unit

## Claims

1. A communications apparatus (102) comprising:
a transmitting unit (1001) that transmits identification information of a predetermined state to an information processing apparatus (101) that stores one or more application sets configured by information of one or more applications and associated with the identification information of the predetermined state;
a receiving unit (1002) that receives the one or more application sets from the information processing apparatus (101) that are determined to be associated with the identification information of the predetermined state by operation control data of the one or more application sets, in response to the transmitting unit (1001) transmitting the identification information of the predetermined state to the information processing apparatus (101); and
an execution managing unit (1004) that retains and executes the one or more application sets received by the receiving unit (1002), wherein
each of the one or more application sets received by the receiving unit (1002) includes:
the operation control data, and
the execution managing unit (1004) executes, based on the operation control data, a state determining process of determining from information identifying the state of the communications apparatus (102), whether the communications apparatus (102) has entered the predetermined state and transmitting the identification information of the predetermined state in response to the communications apparatus (102) entering the predetermined state.

2. The communications apparatus (102) according to claim 1, further comprising a storage unit in which a state determining process program is preinstalled, wherein
the receiving unit (1002) receives an application set including the operation control data, and
the execution managing unit (1004) executes the state determining process by executing the state determining process program using the received operation control data.

3. The communications apparatus (102) according to claim 1 or 2, wherein
the information identifying the state of the communications apparatus (102) is information obtained from a sensor selected from among sensors of the communications apparatus (102) by a state determining processing unit.

4. The communications apparatus (102) according to claim 1 or 2, wherein
the information identifying the state of the communications apparatus (102) is information obtained from an operation selected by a state determining processing unit from among user operations for the communications apparatus (102).

5. The communications apparatus (102) according to claim 1 or 2, wherein
the information identifying the state of the communications apparatus (102) is information selected by a state determining processing unit, from among information at an apparatus other than the information processing apparatus (101) and the communications apparatus (102).

6. The communications apparatus (102) according to claim 1 or 2, and further comprising
a notifying unit that notifies a user of any one among transmission of the identification information of the predetermined state and reception of the one or more application sets.

7. The communications apparatus (102) according to claim 1 or 2, wherein
the execution managing unit (1004) deletes the one or more application sets reflected on the communications apparatus (102) and associated with the predetermined state, when the predetermined state is exited.

8. The communications apparatus (102) according to claim 1, wherein:
the receiving unit (1002) receives operation control information of an application from the information processing apparatus (101), in response to the transmitting unit (1001) transmitting the identification information of the predetermined state to the information processing apparatus (101); and
the execution managing unit (1004) controls operation of the application based on the operation control information received by the receiving unit (1002).

9. The communications apparatus (102) according to claim 8, wherein
the operation control information received by the receiving unit (1002) includes operation control information describing any one among a first operation preventing selection of and a second operation deleting a portion of the one or more application sets reflected on the communications apparatus (102), or one or more applications included in an application set among the one or more application sets reflected on the communications apparatus (102), and
the execution managing unit (1004) determines a non-selectable application set based on the operation control information and presents the non-selectable application to a user via the communications apparatus (102).

10. The communications apparatus (102) according to claim 8, wherein
the operation control information received by the receiving unit (1002) includes operation control information describing any one among execution and prompting of execution of one or more applications included in a portion of the one or more application sets reflected on the communications apparatus (102),
the execution managing unit (1004) determines based on the operation control information, an application that among one or more applications included in the one or more application sets reflected on the communications apparatus (102), is to be executed or execution thereof is to be prompted, and performs an operation of executing or prompting execution of the application on the communications apparatus (102).

11. An information processing program causing a computer to execute a process comprising:
determining from information identifying a state of a communications apparatus (102) whether the communications apparatus (102) has entered a predetermined state;
extracting identification information of the predetermined state in response to the communications apparatus (102) entering the predetermined state;
transmitting the identification information of the predetermined state to an information processing apparatus (101) storing therein one or more application sets configured by information of one or more applications, and the identification information of the predetermined state associated with the one or more application sets;
receiving from the information processing apparatus (101), the one or more application sets that are determined to be associated with the identification information of the predetermined state by operation control data of the one or more application sets in response to transmitting the identification information of the predetermined state; and
managing and executing the received one or more application sets, based on a request by a user, wherein
each of the one or more application sets received at the receiving includes:
the operation control data, and
the extracting is executed based on the operation control data.

## Patentansprüche

1. Kommunikationsvorrichtung (102), umfassend:
eine Sendeeinheit (1001), die Identifikationsinformationen eines vorbestimmten Zustands an eine Informationsverarbeitungsvorrichtung (101) sendet, die einen oder mehrere Anwendungssätze speichert, die durch Informationen einer oder mehrerer Anwendungen konfiguriert sind und den Identifikationsinformationen des vorbestimmten Zustands zugeordnet sind;
eine Empfangseinheit (1002), die den einen oder die mehreren Anwendungssätze von der Informationsverarbeitungsvorrichtung (101) empfängt, von denen bestimmt wird, dass sie den Identifikationsinformationen des vorbestimmten Zustands zugeordnet sind, durch Operationssteuerdaten des einen oder der mehreren Anwendungssätze, als Reaktion darauf,
dass die Sendeeinheit (1001) die Identifikationsinformationen des vorbestimmten Zustands an die Informationsverarbeitungsvorrichtung (101) sendet; und
eine Ausführungsverwaltungseinheit (1004), die den einen oder die mehreren von der Empfangseinheit (1002) empfangen Anwendungssätze behält und ausführt, wobei
jeder des einen oder der mehreren von der Empfangseinheit (1002) empfangen Anwendungssätze aufweist:
die Operationssteuerdaten, und
die Ausführungsverwaltungseinheit (1004) basierend auf den Operationssteuerdaten einen Zustandsbestimmungsprozess ausführt zum Bestimmen, aus Informationen, die den Zustand der Kommunikationsvorrichtung (102) identifizieren, ob die Kommunikationsvorrichtung (102) in den vorbestimmten Zustand eingetreten ist, und Senden der Identifikationsinformationen des vorbestimmten Zustands, als Reaktion darauf, dass die Kommunikationsvorrichtung (102) in den vorbestimmten Zustand eintritt.

2. Kommunikationsvorrichtung (102) nach Anspruch 1, ferner umfassend eine Speichereinheit, in der ein Zustandsbestimmungsverarbeitungsprogramm vorinstalliert ist, wobei
die Empfangseinheit (1002) einen Anwendungssatz empfängt, der die Operationssteuerdaten aufweist, und
die Ausführungsverwaltungseinheit (1004) den Zustandsbestimmungsprozess durch Ausführen des Zustandsbestimmungsverarbeitungsprogramms unter Verwendung der empfangenen Operationssteuerdaten ausführt.

3. Kommunikationsvorrichtung (102) nach Anspruch 1 oder 2, wobei
die Informationen, die den Zustand der Kommunikationsvorrichtung (102) identifizieren, Informationen sind, die von einem Sensor erhalten werden, der aus Sensoren der Kommunikationsvorrichtung (102) durch eine Zustandsbestimmungsverarbeitungseinheit ausgewählt wird.

4. Kommunikationsvorrichtung (102) nach Anspruch 1 oder 2, wobei die Informationen, die den Zustand der Kommunikationsvorrichtung (102) identifizieren, Informationen sind, die von einer Operation erhalten werden, die von einer Zustandsbestimmungsverarbeitungseinheit aus Benutzeroperationen für die Kommunikationsvorrichtung (102) ausgewählt wird.

5. Kommunikationsvorrichtung (102) nach Anspruch 1 oder 2, wobei
die Informationen, die den Zustand der Kommunikationsvorrichtung (102) identifizieren, Informationen sind, die von einer Zustandsbestimmungsverarbeitungseinheit aus Informationen bei einer anderen Vorrichtung als der Informationsverarbeitungsvorrichtung (101) und der Kommunikationsvorrichtung (102) ausgewählt werden.

6. Kommunikationsvorrichtung (102) nach Anspruch 1 oder 2, und ferner umfassend:
eine Benachrichtigungseinheit, die einen Benutzer über eine beliebige unter einer Sendung der Identifikationsinformationen des vorbestimmten Zustands und einem Empfang des einen oder der mehreren Anwendungssätze benachrichtigt.

7. Kommunikationsvorrichtung (102) nach Anspruch 1 oder 2, wobei die Ausführungsverwaltungseinheit (1004) den einen oder die mehreren Anwendungssätze, die auf der Kommunikationsvorrichtung (102) wiedergegeben werden und dem vorbestimmten Zustand zugeordnet sind, löscht, wenn der vorbestimmte Zustand verlassen wird.

8. Kommunikationsvorrichtung (102) nach Anspruch 1, wobei:
die Empfangseinheit (1002) Operationssteuerinformationen einer Anwendung von der Informationsverarbeitungsvorrichtung (101) als Reaktion darauf empfängt, dass die Sendeeinheit (1001) die Identifikationsinformationen des vorbestimmten Zustands an die Informationsverarbeitungsvorrichtung (101) sendet; und
die Ausführungsverwaltungseinheit (1004) die Operation der Anwendung basierend auf den von der Empfangseinheit (1002) empfangenen Operationssteuerinformationen steuert.

9. Kommunikationsvorrichtung (102) nach Anspruch 8, wobei
die von der Empfangseinheit (1002) empfangenen Operationssteuerinformationen Operationssteuerinformationen aufweisen, die eine beliebige unter einer ersten Operation, die die Auswahl verhindert, und einer zweiten Operation, die einen Teil des einen oder der mehreren Anwendungssätze, die auf der Kommunikationsvorrichtung (102) wiedergegeben werden, löscht, oder eine oder mehrere Anwendungen, die in einem Anwendungssatz unter dem einen oder den mehreren Anwendungssätzen enthalten sind, die auf der Kommunikationsvorrichtung (102) wiedergegeben werden, beschreiben, und
die Ausführungsverwaltungseinheit (1004) einen nicht auswählbaren Anwendungssatz basierend auf den Operationssteuerinformationen bestimmt und die nicht auswählbare Anwendung über die Kommunikationsvorrichtung (102) einem Benutzer präsentiert.

10. Kommunikationsvorrichtung (102) nach Anspruch 8, wobei
die von der Empfangseinheit (1002) empfangenen Operationssteuerinformationen Operationssteuerinformationen aufweisen, die eine beliebige unter einer Ausführung und Aufforderung zur Ausführung einer oder mehrerer Anwendungen, die in einem Teil des einen oder der mehreren Anwendungssätze enthalten sind, die auf der Kommunikationsvorrichtung (102) wiedergegeben werden, beschreiben,
die Ausführungsverwaltungseinheit (1004) basierend auf den Operationssteuerinformationen unter einer oder mehreren Anwendungen, die in dem einen oder den mehreren Anwendungssätzen enthalten sind, die die auf der Kommunikationsvorrichtung (102) wiedergegeben werden, eine Anwendung bestimmt, die ausgeführt werden soll oder deren Ausführung aufgefordert werden soll, und eine Operation zum Ausführen oder Auffordern der Ausführung der Anwendung auf der Kommunikationsvorrichtung (102) durchführt.

11. Informationsverarbeitungsprogramm, das einen Computer veranlasst, einen Verarbeitung auszuführen, die umfasst:
Bestimmen, aus Informationen, die einen Zustand einer Kommunikationsvorrichtung (102) identifizieren, ob die Kommunikationsvorrichtung (102) in einen vorbestimmten Zustand eingetreten ist;
Extrahieren von Identifikationsinformationen des vorbestimmten Zustands als Reaktion darauf, dass die Kommunikationsvorrichtung (102) in den vorbestimmten Zustand eintritt;
Senden der Identifikationsinformationen des vorbestimmten Zustands an eine Informationsverarbeitungsvorrichtung (101), um darin eine oder mehrere Anwendungssätze, die durch Informationen einer oder mehrerer Anwendungen konfiguriert sind, und die Identifikationsinformationen des vorbestimmten Zustands, die dem einen oder den mehreren Anwendungssätzen zugeordnet sind, zu speichern;
Empfangen, von der Informationsverarbeitungsvorrichtung (101), des einen oder der mehreren Anwendungssätze, von denen bestimmt wird, dass sie den Identifikationsinformationen des vorbestimmten Zustands zugeordnet sind, durch Operationssteuerdaten des einen oder der mehreren Anwendungssätze als Reaktion auf das Senden der Identifikationsinformationen des vorbestimmten Zustands; und
Verwalten und Ausführen des einen oder der mehreren empfangenen Anwendungssätze basierend auf einer Anfrage eines Benutzers, wobei
jeder des einen oder der mehreren von dem Empfänger empfangen Anwendungssätze aufweist:
die Operationssteuerdaten, und
das Extrahieren basierend auf den Operationssteuerdaten ausgeführt wird.

## Revendications

1. Appareil de communication (102) comprenant :
une unité de transmission (1001) qui transmet des informations d'identification d'un état prédéterminé à un appareil de traitement d'informations (101) qui stocke un ou plusieurs ensembles d'applications configurés par des informations d'une ou plusieurs applications et associés aux informations d'identification de l'état prédéterminé ;
une unité de réception (1002) qui reçoit ledit un ou lesdits plusieurs ensembles d'applications, en provenance de l'appareil de traitement d'informations (101), lesquels sont déterminés comme étant associés aux informations d'identification de l'état prédéterminé par des données de commande d'opération dudit un ou desdits plusieurs ensembles d'applications, en réponse à la transmission, par l'unité de transmission (1001), des informations d'identification de l'état prédéterminé à l'appareil de traitement d'informations (101) ; et
une unité de gestion d'exécution (1004) qui conserve et exécute ledit un ou lesdits plusieurs ensembles d'applications reçus par l'unité de réception (1002), dans laquelle
chaque ensemble dudit un ou desdits plusieurs ensembles d'applications reçus par l'unité de réception (1002) inclut :
les données de commande d'opération ; et
l'unité de gestion d'exécution (1004) exécute, sur la base des données de commande d'opération, un processus de détermination d'état consistant à déterminer, à partir d'informations identifiant l'état de l'appareil de communication (102), si l'appareil de communication (102) est entré dans l'état prédéterminé, et à transmettre les informations d'identification de l'état prédéterminé en réponse au fait que l'appareil de communication (102) est entré dans l'état prédéterminé.

2. Appareil de communication (102) selon la revendication 1, comprenant en outre une unité de stockage dans laquelle un programme de processus de détermination d'état est préinstallé, dans lequel :
l'unité de réception (1002) reçoit un ensemble d'applications incluant les données de commande d'opération ; et
l'unité de gestion d'exécution (1004) exécute le processus de détermination d'état en exécutant le programme de processus de détermination d'état au moyen des données de commande d'opération reçues.

3. Appareil de communication (102) selon la revendication 1 ou 2, dans lequel :
les informations identifiant l'état de l'appareil de communication (102) correspondent à des informations obtenues à partir d'un capteur sélectionné parmi des capteurs de l'appareil de communication (102) par une unité de traitement de détermination d'état.

4. Appareil de communication (102) selon la revendication 1 ou 2, dans lequel :
les informations identifiant l'état de l'appareil de communication (102) correspondent à des informations obtenues à partir d'une opération sélectionnée par une unité de traitement de détermination d'état parmi des opérations d'utilisateur pour l'appareil de communication (102).

5. Appareil de communication (102) selon la revendication 1 ou 2, dans lequel :
les informations identifiant l'état de l'appareil de communication (102) correspondent à des informations sélectionnées par une unité de traitement de détermination d'état, parmi des informations au niveau d'un appareil autre que l'appareil de traitement d'informations (101) et l'appareil de communication (102).

6. Appareil de communication (102) selon la revendication 1 ou 2, comprenant en outre :
une unité de notification qui notifie, à un utilisateur, l'un quelconque des événements parmi une transmission des informations d'identification de l'état prédéterminé et une réception dudit un ou desdits plusieurs ensembles d'applications.

7. Appareil de communication (102) selon la revendication 1 ou 2, dans lequel :
l'unité de gestion d'exécution (1004) supprime ledit un ou lesdits plusieurs ensembles d'applications reflétés sur l'appareil de communication (102) et associés à l'état prédéterminé, lorsque l'appareil est sorti de l'état prédéterminé.

8. Appareil de communication (102) selon la revendication 1, dans lequel :
l'unité de réception (1002) reçoit des informations de commande d'opération d'une application, en provenance de l'appareil de traitement d'informations (101), en réponse à la transmission, par l'unité de transmission (1001), des informations d'identification de l'état prédéterminé, à l'appareil de traitement d'informations (101) ; et
l'unité de gestion d'exécution (1004) commande l'opération de l'application sur la base des informations de commande d'opération reçues par l'unité de réception (1002).

9. Appareil de communication (102) selon la revendication 8, dans lequel :
les informations de commande d'opération reçues par l'unité de réception (1002) incluent des informations de commande d'opération décrivant l'une quelconque parmi une première opération empêchant la sélection dudit un ou desdits plusieurs ensembles d'applications, et une seconde opération supprimant une partie dudit un ou desdits plusieurs ensembles d'applications reflétés sur l'appareil de communication (102), ou une ou plusieurs applications incluses dans un ensemble d'applications parmi ledit un ou lesdits plusieurs ensembles d'applications reflétés sur l'appareil de communication (102) ; et
l'unité de gestion d'exécution (1004) détermine un ensemble d'applications non sélectionnables, sur la base des informations de commande d'opération, et présente l'application non sélectionnable à un utilisateur par l'intermédiaire de l'appareil de communication (102).

10. Appareil de communication (102) selon la revendication 8, dans lequel :
les informations de commande d'opération reçues par l'unité de réception (1002) incluent des informations de commande d'opération décrivant l'une quelconque parmi une exécution et une demande d'exécution d'une ou plusieurs applications incluses dans une partie dudit un ou desdits plusieurs ensembles d'applications reflétés sur l'appareil de communication (102) ;
l'unité de gestion d'exécution (1004) détermine, sur la base des informations de commande d'opération, une application qui, parmi une ou plusieurs applications incluses dans ledit un ou lesdits plusieurs ensembles d'applications reflétés sur l'appareil de communication (102), doit être exécutée, ou dont l'exécution doit être demandée, et met en œuvre une opération d'exécution ou de demande d'exécution de l'application sur l'appareil de communication (102).

11. Programme de traitement d'informations amenant un ordinateur à exécuter un processus comprenant les étapes ci-dessous consistant à :
déterminer, à partir d'informations identifiant un état d'un appareil de communication (102), si l'appareil de communication (102) est entré dans un état prédéterminé ;
extraire des informations d'identification de l'état prédéterminé en réponse à l'entrée de l'appareil de communication (102) dans l'état prédéterminé ;
transmettre les informations d'identification de l'état prédéterminé à un appareil de traitement d'informations (101) qui stocke dans celui-ci un ou plusieurs ensembles d'applications configurés par des informations d'une ou plusieurs applications, et les informations d'identification de l'état prédéterminé associées audit un ou auxdits plusieurs ensembles d'applications ;
recevoir, en provenance de l'appareil de traitement d'informations (101), ledit un ou lesdits plusieurs ensembles d'applications qui sont déterminés comme étant associés aux informations d'identification de l'état prédéterminé, par des données de commande d'opération dudit un ou desdits plusieurs ensembles d'applications, en réponse à la transmission des informations d'identification de l'état prédéterminé ; et
gérer et exécuter ledit un ou lesdits plusieurs ensembles d'applications reçus, sur la base d'une demande d'un utilisateur, dans lequel :
chaque ensemble dudit un ou desdits plusieurs ensembles d'applications reçus à l'étape de réception inclut :
les données de commande d'opération ; et
l'étape d'extraction est exécutée sur la base des données de commande d'opération.
